# EUROPEAN PATENT APPLICATION

(11) **EP 4 509 952 A1**
(43) Date of publication of application: **19.02.2025**
(21) Application number: 24745881.3
(22) Date of filing: 27.06.2024
(51) Int. Cl.: G06F 1/16, H04M 1/02

(54) **FOLDABLE ELECTRONIC DEVICE**

(30) Priority: 30.06.2023 KR 20230085185; 21.08.2023 KR 20230109186
(71) Applicant: Samsung Electronics Co., Ltd, Suwon-si, Gyeonggi-do 16677 (KR)
(72) Inventor: PARK, Changhee, Suwon-si, Gyeonggi-do 16677 (KR); RYU, Yeonhun, Suwon-si, Gyeonggi-do 16677 (KR); HA, Seonwoo, Suwon-si, Gyeonggi-do 16677 (KR)
(74) Representative: HGF
(86) International application number: PCT/KR2024/008986
(87) International publication number: WO 2025/005687

(57) **Abstract**

According to an embodiment of the disclosure, an electronic device may comprise: a foldable display; a first hinge assembly configured to enable folding of the foldable display along a folding axis; and a housing configured to receive at least a portion of the first hinge assembly; wherein the first hinge assembly comprises a protruding part protruding from an end surface of the first hinge assembly towards a first inner side surface of the housing; and wherein the end surface and first inner side surface are perpendicular to the direction of the folding axis.

## Description

### [Technical Field]

The disclosure relates to an electronic device, for example, to a foldable electronic device including a hinge.

### [Background Art]

An electronic device (e.g., foldable electronic device) may include at least one hinge. The electronic device may include a pair of housings (e.g., first housing and second housing) foldably coupled to each other through the hinge.

A portion of the housing may be disposed to receive at least a portion of the hinge. For example, the hinge may be disposed to cover at least a portion of the housing when viewed from the outside of the electronic device. The hinge and the housing may include different materials.

### [Disclosure of Invention]

### [Technical Problem]

In the case that an external impact is applied to a housing of the electronic device, an appearance of the housing may be deformed. In the case that rigidity of the housing itself is the only way to withstand an external impact, it may be difficult to prevent deformation of the appearance of the housing.

When the appearance of the housing is deformed due to an external impact, the sense of movement provided to a user during folding and unfolding operations of a foldable electronic device may be reduced. In the case that both sides of the housing are deformed due to an external impact, engaging may occur during folding and unfolding operations of the foldable electronic device. Further, as the appearance of the housing is deformed and a portion of the housing comes into contact with a display, the display may be damaged.

Therefore, a structure that supports the housing may be needed to prevent the appearance of the housing from being deformed by an external impact.

### [Solution to Problem]

According to an embodiment of the disclosure, an electronic device may include a foldable display; a housing including a first housing, a second housing, and a third housing positioned between the first housing and the second housing, and configured to receive at least a portion of the foldable display; a fixing member fixed to the third housing; a driving member connected to the fixing member and driven by a user manipulation; and a filling member disposed in the third housing, wherein the fixing member may include a protruding part protruded from a distal end surface thereof in a length direction thereof, the protruding part may be disposed to face a first surface of the third housing, which is a surface perpendicular to a length direction of the third housing, and the filling member may be disposed between the distal end surface of the fixing member and the first surface of the third housing.

According to an embodiment of the disclosure, an electronic device may include a foldable display; hinge assemblies configured to convert a state of the foldable display to a folded state or an unfolded state; and a housing configured to receive at least a portion of the hinge assemblies, wherein the hinge assemblies may include a plurality of protruding parts formed from the distal end thereof in a length direction thereof and having a size smaller than that of a distal end surface thereof, and an inner side surface of the housing, which is a surface perpendicular to a length direction of the housing, may be configured to face the plurality of protruding parts.

According to an embodiment of the disclosure, an electronic device may include a foldable display; a first housing; a second housing; a hinge housing disposed between the first housing and the second housing; and hinge assemblies including a hinge bracket fixed to the hinge housing and a driving member connected to the hinge bracket, wherein the first housing and the second housing may be rotatably coupled to each other through the hinge assemblies, the hinge bracket may include a protruding part protruded from a distal end thereof in a length direction thereof, and the protruding part may be fixed to the hinge housing so as to provide structural strength to a longitudinal distal end portion of the hinge housing.

According to an embodiment of the disclosure, an electronic device may comprise: a foldable display; a first hinge assembly configured to enable folding of the foldable display along a folding axis; and a housing configured to receive at least a portion of the first hinge assembly; wherein the first hinge assembly comprises a protruding part protruding from an end surface of the first hinge assembly towards a first inner side surface of the housing; and wherein the end surface and first inner side surface are perpendicular to the direction of the folding axis.

### [Advantageous Effects of Invention]

An electronic device according to an embodiment of the disclosure can support a housing using a protruding part formed in a hinge, and reduce or prevent an appearance of the housing from being deformed by an external impact.

The electronic device according to an embodiment of the disclosure can reduce or prevent an appearance of the housing from being deformed by an external impact, thereby reducing occurrence of engaging during folding and unfolding operations of the electronic device.

The electronic device according to an embodiment of the disclosure can reduce or prevent an appearance of the housing from being deformed by an external impact, thereby reducing a display from being damaged by the housing.

### [Brief Description of Drawings]

FIG. 1 is a block diagram illustrating an electronic device in a network environment according to an embodiment.
FIGS. 2A and 2B are front and rear views illustrating an unfolded state of an electronic device according to an embodiment of the disclosure.
FIGS. 3A and 3B are front and rear views illustrating a folded state of an electronic device according to an embodiment of the disclosure.
FIG. 4 is a perspective view illustrating an electronic device according to an embodiment of the disclosure.
FIG. 5 is an exploded perspective view illustrating an electronic device according to an embodiment of the disclosure.
FIG. 6 is a diagram illustrating a driving member, a fixing member, a third housing, and a display according to an embodiment of the disclosure.
FIG. 7 is a diagram illustrating a third housing according to an embodiment of the disclosure.
FIGS. 8A, 8B, and 8C are diagrams illustrating a fixing member according to an embodiment of the disclosure.
FIGS. 9A, 9B, and 9C are diagrams illustrating a third housing and a fixing member according to an embodiment of the disclosure.
FIG. 10 is a diagram illustrating a third housing, a filling member, and a display according to an embodiment of the disclosure.
FIGS. 11A, 11B, and 11C are diagrams illustrating a third housing, a fixing member, and a filling member according to an embodiment of the disclosure.
FIGS. 12A and 12B are diagrams illustrating a fixing member including a connecting part according to an embodiment of the disclosure.
FIG. 13 is a diagram illustrating a fixing member and a third housing according to an embodiment of the disclosure.
FIGS. 14A and 14B are diagrams illustrating an amount of deformation of a third housing due to a drop of an electronic device in a folded state of the electronic device according to an embodiment of the disclosure.
FIGS. 15A and 15B are diagrams illustrating a shear deformation amount of a third housing due to a drop of an electronic device in an unfolded state of the electronic device according to an embodiment of the disclosure.

### [Mode for Disclosure]

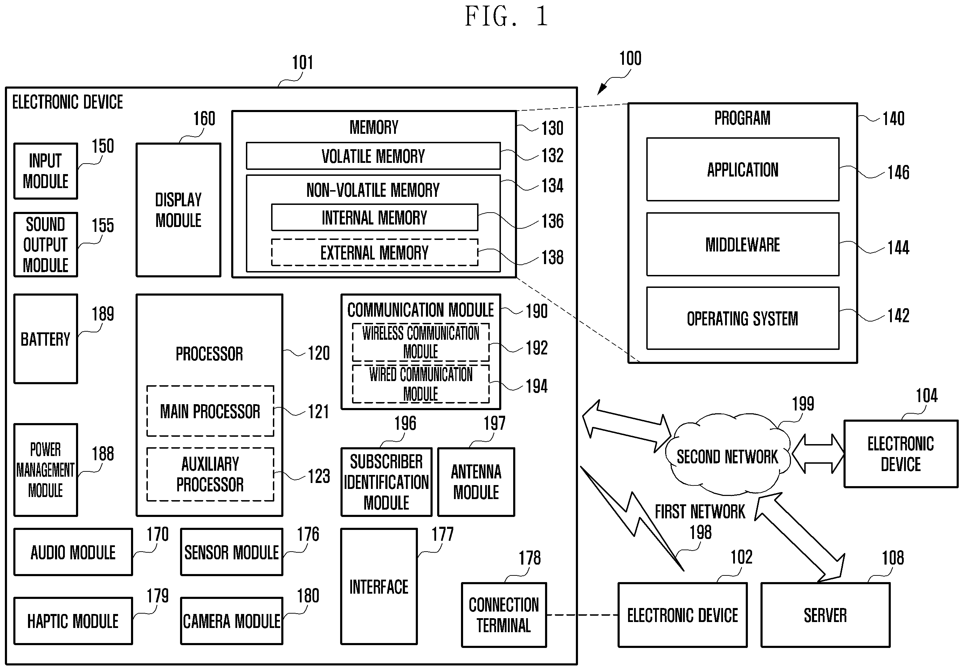

FIG. 1 is a block diagram illustrating an electronic device in a network environment according to an embodiment. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter(mm) Wave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

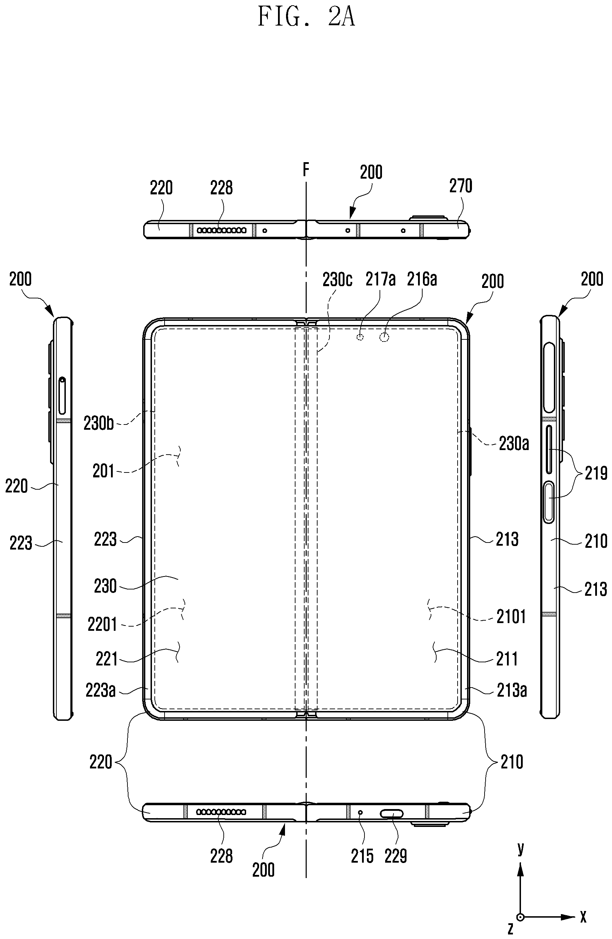

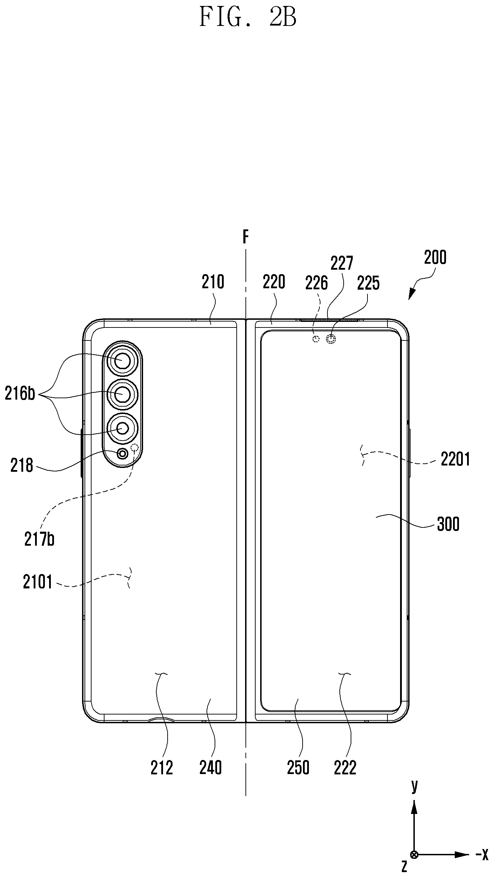

FIGS. 2A and 2B are diagrams illustrating a front view and a rear view, respectively, of an unfolded state of an electronic device according to an embodiment.

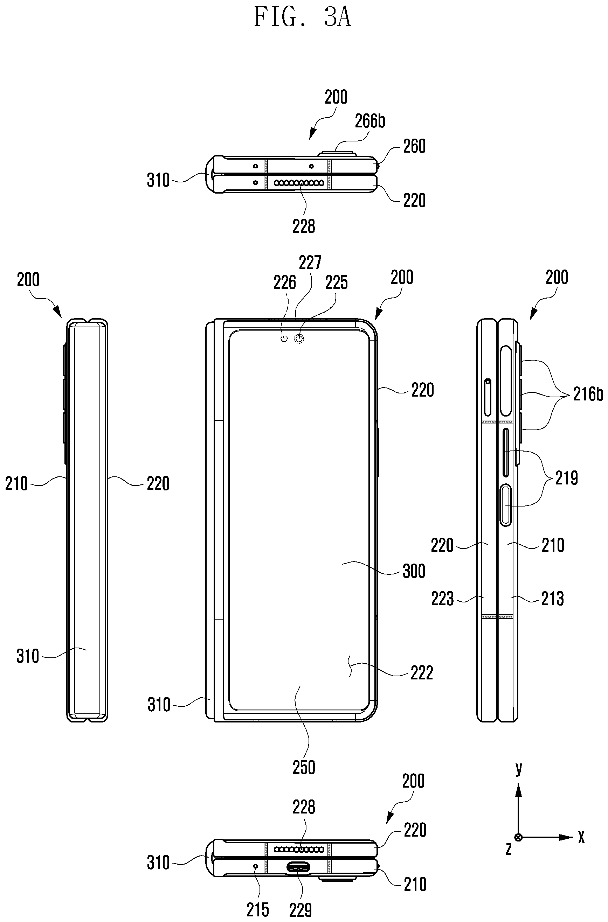

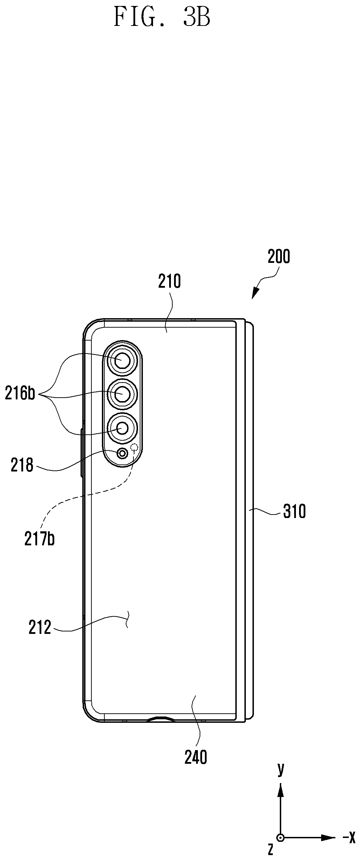

FIGS. 3A and 3B are diagrams illustrating a front view and a rear view, respectively, of a folded state of an electronic device according to an embodiment.

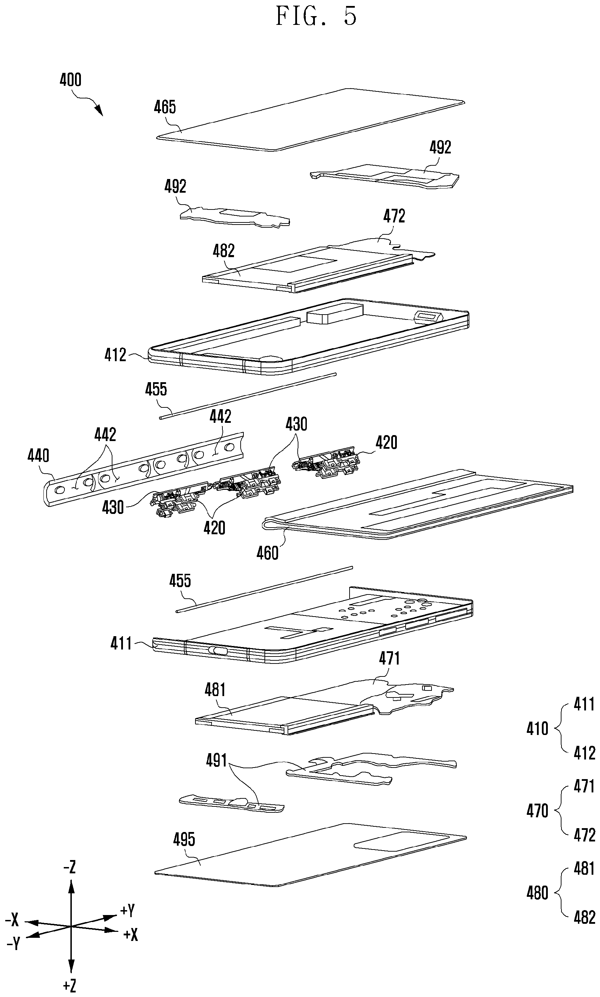

Referring to FIGS. 2A, 2B, 3A and 3B (which may be referred to as FIGS. 2A to 3B), an electronic device 200 may include a pair of housings 210 and 220 (e.g., a foldable housing structure) rotatably coupled to each other with reference to folding axis F through a hinge device (e.g., a driving member 420 of FIG. 5) (e.g., a hinge module or a hinge structure) so as to be folded with respect to each other, a first display 230 (e.g., a flexible display, a foldable display, or a main display) disposed through the pair of housings 210 and 220, and/or a second display 300 (e.g., a sub display) disposed through the second housing 220. According to an embodiment, at least a part of the hinge device (e.g., the driving member 420 of FIG. 5) may be disposed so as not to be seen from the outside through the first housing 210 and the second housing 220, and may be disposed so as not to be seen from the outside through the hinge housing 310 covering a foldable portion. In the disclosure, a surface in which the first display 230 is disposed may be defined as a front surface of the electronic device 200, and a surface opposite to the front surface may be defined as a rear surface of the electronic device 200. In addition, a surface surrounding a space between the front surface and the rear surface may be defined as a side surface of the electronic device 200.

Referring to FIGS. 2A, 2B, 3A and 3B, and throughout the disclosure, the folding axis F may be considered to be the Y-axis of the electronic device. The X-axis may be considered to be the axis (perpendicular to the folding axis F) to which the display surfaces of first housing 210 and second housing 220 are parallel when the electronic device is in an unfolded state (such that the angle between the first housing 210 and second housing 220 is 180°), for example as illustrated in FIGS. 2A and 2B, or a completely folded state (such that the angle between the first housing 210 and second housing 220 is 0°), for example as illustrated in FIGS. 2A and 2B. The Z-axis may be considered to be the axis perpendicular to the Y-axis and X-axis.

According to an embodiment, the pair of housings 210 and 220 may include a first housing 210 and a second housing 220 foldably arranged with respect to each other through the hinge device (e.g., the driving member 420 of FIG. 5). According to an embodiment, the shape and the coupling of the pair of housings 210 and 220 are not limited to those illustrated in FIGS. 2A to 3B, and the pair of housings 210 and 220 may be implemented by a combination and/or coupling of other shapes or components. According to an embodiment, the first housing 210 and the second housing 220 may be arranged on opposite sides with reference to the folding axis F, and may have shapes that are entirely symmetric to each other with respect to the folding axis F. According to an embodiment, the first housing 210 and the second housing 220 may be asymmetrically folded with reference to the folding axis F. According to an embodiment, the angle or the distance between the first housing 210 and the second housing 220 may vary depending on whether the electronic device 200 is in an unfolded state, a folded state, or an intermediate state.

According to an embodiment, the first housing 210 may include, in the unfolded state of the electronic device 200, a first surface 211 connected to the hinge device (e.g., the driving member 420 of FIG. 5) and disposed to be oriented to the front surface of the electronic device 200, a second surface 212 oriented in a direction opposite to the first surface 211, and/or a first side member 213 surrounding at least a part of a first space between the first surface 211 and the second surface 212. According to an embodiment, the second housing 220 may include, in the unfolded state of the electronic device 200, a third surface 221 connected to the hinge device (e.g., the driving member 420 of FIG. 5) and disposed to be oriented to the front surface of the electronic device 200, a fourth surface 222 oriented in a direction opposite to the third surface 221, and/or a second side member 223 surrounding at least a part of a second space between the third surface 221 and the fourth surface 222. According to an embodiment, the first surface 211 and the third surface 221 may be oriented in substantially the same direction in the unfolded state, and the first surface 211 and the third surface 221 may at least partially face each other in the folded state. According to an embodiment, the electronic device 200 may include a recess 201 formed to receive the first display 230 through structural coupling of the first housing 210 and the second housing 220. According to an embodiment, the recess 201 may have substantially the same shape as the first display 230. According to an embodiment, the first housing 210 may include a first protection frame 213a (e.g., a first decoration member) which is, when seen from above the first display 230, coupled to the first side member 213, disposed to overlap with an edge of the first display 230, so as to cover the edge of the first display 230 to allow the same not to be seen from the outside. According to an embodiment, the first protection frame 213a may be integrally formed with the first side member 213. According to an embodiment, the second housing 220 may include a second protection frame 223a (e.g., a second decoration member) which is, when seen from above the first display 230, coupled to the second side member 223, disposed to overlap with an edge of the first display 230, so as to cover the edge of the first display 230 to allow the same not to be seen from the outside. According to an embodiment, the second protection frame 223a may be integrally formed with the first side member 223. In an embodiment, the first protection frame 213a and the second protection frame 223a may be omitted.

According to an embodiment, the hinge housing 310 (e.g., a hinge cover) may be disposed between the first housing 210 and the second housing 220, and may be disposed to cover a part (e.g., at least one hinge module) of the hinge device (e.g., the driving member 420 of FIG. 5) disposed on the hinge housing 310. According to an embodiment, the hinge housing 310 may be hidden or exposed from or to the outside by a part of the first housing 210 and the second housing 220 according to the unfolded state, the folded state, or the intermediate state of the electronic device 200. For example, when the electronic device 200 is in the unfolded state, at least a part of the hinge housing 310 may be covered by the first housing 210 and the second housing 220 and not be substantially exposed. According to an embodiment, when the electronic device 200 is in the folded state, at least a part of the hinge housing 310 may be exposed to the outside between the first housing 210 and the second housing 220. According to an embodiment, in the intermediate state in which the first housing 210 and the second housing 220 are folded with each other by a predetermined angle (folded with a certain angle), the hinge housing 310 may be at least partially exposed to the outside of the electronic device 200 between the first housing 210 and the second housing 220. For example, an area in which the hinge housing 310 is exposed to the outside, may be smaller than that in a case in which the electronic device 200 is completely folded. According to an embodiment, the hinge housing 310 may include a curved surface.

According to an embodiment, when the electronic device 200 is in the unfolded state (e.g., the states shown in FIGS. 2A and 2B), the first housing 210 and the second housing 220 may meet at an about 180-degree angle, and a first area 230a, a second area 230b, and a folding area 230c of the first display 230 may form the same plane and arranged to be oriented in substantially the same direction (e.g., a z-axis direction). In an embodiment, when the electronic device 200 is in the unfolded state, the first housing 210 may rotate by an about 360-degree angle with respect to the second housing 220, and may be outwardly folded (an out-folding scheme) so that the second surface 212 and the fourth surface 222 face each other.

According to an embodiment, when the electronic device 200 is in the folded state (e.g., the states shown in FIGS. 3A and 3B), the first surface 211 of the first housing 210 and the third surface 221 of the second housing 220 may be arranged to face each other. In this case, the first area 230a and the second area 230b of the first display 230 may form a narrow angle (e.g., a range between 0 degrees to about 10 degrees) through the folding area 230c, and may be arranged to face each other. According to an embodiment, at least a part of the folding area 230c may be deformed into a curved shape having a predetermined curvature. According to an embodiment, when the electronic device 200 is in the intermediate state, the first housing 210 and the second housing 220 may be arranged at a predetermined angle (a certain angle). In this case, the first area 230a and the second area 230b of the first display 230 may form an angle that is greater than that in the folded state and smaller than that in the unfolded state, and the curvature of the folding area 230c may be lower than that in the folded state, and may be higher than that in the unfolded state. In an embodiment, the first housing 210 and the second housing 220 may form an angle which allows stopping at a designated folding angle between the folded state and the unfolded state (a free stop function), through the hinge device (e.g., the driving member 420 of FIG. 5). In an embodiment, the first housing 210 and the second housing 220 may continuously operate while being pressed in an unfolding direction or a folding direction with reference to a designated inflection angle, through the hinge device (e.g., the driving member 420 of FIG. 5).

According to an embodiment, the electronic device 200 may include at least one of at least one display 230 and 300 disposed on the first housing 210 and/or the second housing 220, an input device 215, sound output devices 227 and 228, sensor modules 217a, 217b, and 226, camera modules 216a, 216b, and 225, a key input device 219, an indicator (not shown), or a connector port 229. In an embodiment, the electronic device 200 may omit at least one of the elements, or may additionally include at least one another element.

According to an embodiment, the at least one display 230 and 300 may include a first display 230 (e.g., a flexible display) disposed to be supported by the third surface 221 of the second housing 220 from the first surface 211 of the first housing 210, and a second display 300 disposed to be at least partially seen from the outside through the fourth surface 222 in a space in the second housing 220. In an embodiment, the second display 300 may be disposed to be seen from the outside through the second surface 212 in a space in the first housing 210. According to an embodiment, the first display 230 may be mainly used in the unfolded state of the electronic device 200, and the second display 300 may be mainly used in the folded state of the electronic device 200. According to an embodiment, the electronic device 200 may control, in the intermediate state, the first display 230 and/or the second display 300 to be used, based on a folding angle between the first housing 210 and the second housing 220.

According to an embodiment, the first display 230 may be disposed in a receiving space formed by the pair of housings 210 and 220. For example, the first display 200 may be disposed in a recess 201 formed by the pair of housings 210 and 220, and may be disposed to occupy substantially the most of the front surface of the electronic device 200 in the unfolded state. According to an embodiment, the first display 230 may include a flexible display having at least one area which can be deformed into a plane or a curved surface. According to an embodiment, the first display 230 may include the first area 230a facing the first housing 210 and the second area 230b facing the second housing 220. According to an embodiment, the first display 230 may include the folding area 230c including a part of the first area 230a and a part of the second area 230b with respect to the folding axis F. According to an embodiment, at least a part of the folding area 230c may include an area corresponding to the hinge device (e.g., the driving member 420 of FIG. 5). According to an embodiment, a division of an area of the first display 230 merely corresponds to an example physical division by the pair of housings 210 and 220 and the hinge device (e.g., the driving member 420 of FIG. 5), and the first display 230 may be substantially displayed as one seamless full screen through the pair of the housings 210 and 220 and the hinge device (e.g., the driving member 420 of FIG. 5). According to an embodiment, the first area 230a and the second area 230b may have shapes that are entirely symmetric or partially asymmetric to each other with respect to the folding area 230c.

According to an embodiment, the electronic device 200 may include a first rear cover 240 disposed on the second surface 212 of the first housing 210 and a second rear cover 250 disposed on the fourth surface 222 of the second housing 220. In an embodiment, at least a part of the first rear cover 240 may be integrally formed with the first side member 213. In an embodiment, at least a part of the second rear cover 250 may be integrally formed with the second side member 223. According to an embodiment, at least one of the first rear cover 240 and the second rear cover 250 may be substantially formed of a transparent plate (e.g., a polymer plate or glass plate including various coding layers) or an opaque plate. According to an embodiment, the first rear cover 240 may be formed of, for example, an opaque plate such as coded or colored glass, ceramic, polymer, metal (e.g., aluminum, stainless steel (STS), or magnesium), or a combination of at least two of the materials above. According to an embodiment, the second rear cover 250 may be substantially formed of, for example, a transparent plate such as glass or polymer. Accordingly, the second display 300 may be disposed to be seen from the outside through the second rear cover 250 in a space in the second housing 220.

According to an embodiment, the input device 215 may include a microphone. In an embodiment, the input device 215 may include multiple microphones arranged to detect the direction of sound. According to an embodiment, the sound output devices 227 and 228 may include speakers. According to an embodiment, the sound output devices 227 and 228 may include a call receiver 227 disposed through the fourth surface 222 of the second housing 220 and an external speaker 228 disposed through at least a part of the second side member 223 of the second housing 220. In an embodiment, the input device 215, the sound output devices 227 and 228, and the connector 229 may be disposed in spaces of the first housing 210 and/or the second housing 220, and may be exposed to an external environment through at least one hole formed through the first housing 210 and/or the second housing 220. In an embodiment, holes formed through the first housing 210 and/or the second housing 220 may be commonly used for the input device 215 and the sound output devices 227 and 228. In an embodiment, the sound output devices 227 and 228 may include a speaker (e.g., a piezo speaker) operating without including a hole formed through the first housing 210 and/or the second housing 220.

According to an embodiment, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. According to an embodiment, the electronic device 200 may include a flash 218 disposed around the second camera module 216b. According to an embodiment, the flash 218 may include, for example, a light-emitting diode or a xenon lamp. According to an embodiment, the camera modules 216a, 216b, and 225 may include one or multiple lenses, an image sensor, and/or an image signal processor. In an embodiment, at least one of the camera modules 216a, 216b, and 225 may include two or more lenses (e.g., wide-angle and telephoto lenses) and image sensors, and may be arranged together on one surface of the first housing 210 and/or the second housing 220.

According to an embodiment, the sensor modules 217a, 217b, and 226 may generate a data value or an electrical signal corresponding to an internal operational state or an external environmental state of the electronic device 200.According to an embodiment, the sensor modules 217a, 217b, and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In an embodiment, the sensor modules 217a, 217b, and 226 may include at least one of a gesture sensor, a grip sensor, a color sensor, an infrared (IR) sensor, an illuminance sensor, an ultrasonic sensor, an iris recognition sensor, or a distance detection sensor (e.g., a time of flight (TOF) sensor or a light detection and ranging (LiDAR)).

According to an embodiment, the electronic device 200 may further include an unillustrated sensor module, for example, at least one of an atmospheric sensor, a magnetic sensor, a biometric sensor, a temperature sensor, a humidity sensor, or a fingerprint recognition sensor. In an embodiment, the fingerprint recognition sensor may be disposed through at least one of the first side member 213 of the first housing 210 and/or the second side member 223 of the second housing 220.

According to an embodiment, the key input device 219 may be disposed to be exposed to the outside through the first side member 213 of the first housing 210. In an embodiment, the key input device 219 may be disposed to be exposed to the outside through the second side member 223 of the second housing 220. In an embodiment, the electronic device 200 may not include some or all of the key input device 219, and the unincluded key input device 219 may be implemented in another shape such as a soft key on the least one display 230 and 300. In an embodiment, the key input device 219 may be implemented using a pressure sensor included in the at least one display 230 and 300.

According to an embodiment, the connector port 229 may include a connector (e.g., a USB connector or an IF module (an interface connector port module)) for transmitting or receiving data and/or power to and/or from an external electronic device. In an embodiment, the connector port 229 may perform a function of transmitting or receiving an audio signal to or from the external electronic device together, or may further include a separate connector port (e.g., an ear jack hole) for performing a function of transmitting or receiving an audio signal to or from the external electronic device.

According to an embodiment, at least one camera modules 216a and 225 of the camera modules 216a, 216b, and 225, at least one sensor module 217a and 226 of the sensor modules 217a, 217b, and 226, and/or an indicator may be arranged to be exposed through the at least one display 230 and 300. For example, the at least one camera modules 216a and 225, the at least one sensor module 217a and 226, and/or the indicator may be arranged under an activated area (a display area) of the at least one display 230 and 300 in a space in the at least one housing 210 and 220, and may be arranged to come into contact with an external environment through a transparent area or an opening that is perforated to a cover member (e.g., a window layer (not shown) of the first display 230 and/or the second rear cover 250). According to an embodiment, an area in which the at least one display 230 and 300 and the at least one camera module 216a and 225 face each other may be formed as a transmission area having a predetermined transmission ratio, as a part of an area in which a content is displayed. According to an embodiment, the transmission area may be formed to have a transmission ratio in the range of about 5% to about 20%. The transmission area may include an area overlapping with an effective area (e.g., an angle of view area) of the at least one camera module 216a and 225, wherein an image is formed on the image sensor in the effective area, and light for generating an image passes through the effective area. For example, the transmission area of the display 230 and 300 may include an area in which the density of a pixel is lower than that in a surrounding area. For example, the transmission area may be replaced with an opening. For example, the at least one camera module 216a and 225 may include an under-display camera (UDC) or an under-panel camera (UPC). In an embodiment, some camera modules or sensor modules 271a and 226 may be arranged to perform functions thereof without being visually exposed through the display. For example, an area facing the sensor module 217a and 226 and/or the camera module 216a and 225 arranged under the display 230 and 300 (e.g., a display panel) corresponds to an under-display camera (UDC) structure, and a perforated opening is not necessarily required.

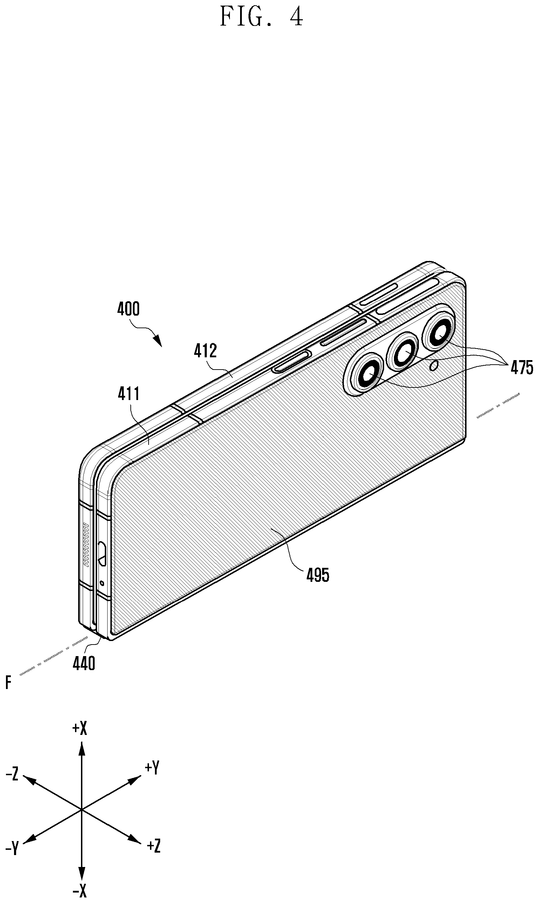

FIG. 4 is a perspective view illustrating an electronic device 400 according to an embodiment of the disclosure.

FIG. 5 is an exploded perspective view illustrating an electronic device 400 according to an embodiment of the disclosure.

The electronic device 400 illustrated in FIG. 4 may mean the electronic device 200 illustrated in FIGS. 2A, 2B, 3A, and 3B or may include at least a portion of the electronic device 200.

In describing the electronic device 400 of FIG. 4, a detailed description of substantially the same components as those of the electronic device 400 of FIGS. 2A, 2B, 3A, and 3B may be omitted.

With reference to FIGS. 4 and 5, the electronic device 400 according to an embodiment may include a housing 410, a driving member 420, a fixing member 430, a hinge housing 440, a side blocking member 455, a display 460 (for example a foldable display), an auxiliary display 465, a substrate 470, a battery 480, rear support members 491 and 492, and/or a rear cover 495.

In the electronic device 400 of FIG. 4, a first housing 411 and a second housing 412 may be unfolded or folded around a folding axis F, and be in an unfolded or folded state. The unfolded state of the electronic device 400 may be substantially the same as the unfolded state of the electronic device 200 illustrated in FIGS. 2A and 2B. The folded state of the electronic device 400 may be substantially the same as the folded state of the electronic device 200 illustrated in FIGS. 3A and 3B.

In an embodiment, the housing 410 may include a first housing 411 and/or a second housing 412. The first housing 411 and the second housing 412 may be substantially the same as the first housing 210 and the second housing 220, respectively of FIG. 2A. In an embodiment, the first housing 411 and the second housing 412 may be rotatably coupled about the folding axis F.

In an embodiment, the display 460 may be substantially the same as the first display 230 of FIG. 2A.

In an embodiment, the display 460 may be disposed to be supported by the first housing 411 and the second housing 412. The display 460 may include a flexible or foldable display in which at least a partial area may be transformed into a flat surface or a curved surface. In the folded state of the electronic device 400, at least a partial area of the display 460 may be transformed into a curved surface. In an embodiment, the display 460 may be a flexible display in which at least a partial area may be folded or rolled.

In an embodiment, the housing 410 may receive at least a portion of the display 460.

In an embodiment, the driving member 420 may foldably connect the first housing 411 and the second housing 412. The first housing 411 and the second housing 412 may be foldably connected to each other based on the folding axis F through the driving member 420. The driving member 420 may be disposed at one side (e.g., negative X-axis direction) of the display 460. The driving member 420 may be disposed along one direction (e.g., Y-axis direction) at one side of the display 460. In an embodiment, the driving member 420 may be driven by a user manipulation.

In an embodiment, the fixing member 430 may serve to support the driving member 420. The fixing member 430 may support the driving member 420 in a direction opposite to a direction in which the display 460 is disposed based on the driving member 420. The fixing member 430 may also be referred to as a support member.

In an embodiment, the driving member 420 may correspond to a component that rotates or moves according to a movement of the electronic device 400 (e.g., an unfolding operation and folding operation of the electronic device 400). In an embodiment, the fixing member 430 may correspond to a component that does not move relative to the driving member 420. For example, the fixing member 430 may be a component disposed in the same direction based on the driving member 420 regardless of the movement of the driving member 420.

In an embodiment, the driving member 420 may be (or correspond to) a hinge device, and the fixing member 430 may be (or correspond to) a bracket supporting the hinge device.

In an embodiment, the driving member 420 and the fixing member 430 may be included in the hinge device, hinge, or hinge assembly as components of the hinge device, hinge, or hinge assembly. For example, the electronic device 400 may include a hinge assembly, and the hinge assembly may comprise the driving member 420 and the fixing member 430.

In an embodiment, at least a portion of the driving member 420 and/or the fixing member 430 may be received in a third housing 440.

In an embodiment, the housing 410 may include a hinge housing 440 (e.g., third housing). The hinge housing 440 may be positioned between the first housing 411 and the second housing 412.

The hinge housing 440 may mean the third housing 440 positioned between the first housing 411 and the second housing 412.

In an embodiment, the third housing 440 may be part of the first housing 411 or the second housing 412.

In an embodiment, the first housing 411, the second housing 412, and the third housing 440 may be part of one housing.

In an embodiment, the third housing 440 may be substantially the same as the hinge housing 310 of FIGS. 3A and 3B.

In an embodiment, the third housing 440 may be disposed between the first housing 411 and the second housing 412 and be disposed to cover at least a portion of the driving member 420.

In an embodiment, the third housing 440 may be covered or be exposed to the outside by a portion of the first housing 411 and the second housing 412 according to an unfolded state, a folded state, or an intermediate state of the electronic device 400.

In an embodiment, the side blocking member 455 may be disposed in the third housing 440. The side blocking member 455 may be a member extended along a length direction (e.g., +Y direction) of the third housing 440. The side blocking member 455 may serve to block or reduce external foreign materials from flowing into the electronic device 400.

In an embodiment, the fixing member 430 may be disposed in the third housing 440. For example, the fixing member 430 may be disposed in a seating space 442 of the third housing 440. In an embodiment, the fixing member 430 may be fixed to the third housing 440.

In an embodiment, the auxiliary display 465 may be substantially the same as the second display 300 of FIG. 3A.

In an embodiment, the auxiliary display 465 may be disposed in the second housing 412. For example, the auxiliary display 465 may be disposed at a surface of the second housing 412 opposite to a surface in which the display 460 is disposed. The surface of the second housing 412 in which the auxiliary display 465 is disposed may be a surface facing the outside of the electronic device 400 in a folded state of the electronic device 400.

In an embodiment, the substrate 470 may include a first substrate 471 and/or a second substrate 472. The first substrate 471 may be disposed in the first housing 411. The second substrate 472 may be disposed in the second housing 412. The first substrate 471 and the second substrate 472 may include a plurality of electronic components disposed to implement various functions of the electronic device 400.

In an embodiment, a camera module 475 may be substantially the same as the second camera module 216b of FIG. 2B.

In an embodiment, the camera module 475 may include one or at least one lens, at least one image sensor, and/or at least one image signal processor.

In an embodiment, the electronic device 400 may include at least one battery 480. The battery 480 may include a first battery 481 and/or a second battery 482. The first battery 481 may be disposed in the first housing 411. The second battery 482 may be disposed in the second housing 412. The first battery 481 and the second battery 482 may supply power to at least one component of the electronic device 400.

In an embodiment, the rear cover 495 may be disposed to cover at least a portion of the first housing 411.

For example, the rear cover 495 may be disposed at a surface of the first housing 411 opposite to a surface in which the display 460 is disposed. The surface of the first housing 411 in which the rear cover 495 is disposed may be a surface facing the outside of the electronic device 400 in a folded state of the electronic device 400. The rear cover 495 may cover at least a portion of the first housing 411 and serve to protect components disposed inside the first housing 411.

In an embodiment, the rear support members 491 and 492 may include a first rear support member 491 and/or a second rear support member 492. The first rear support member 491 may be disposed between the first housing 411 and the rear cover 495. The second rear support member 492 may be disposed between the second housing 412 and the auxiliary display 465. The first rear support member 491 and the second rear support member 492 may serve to support components disposed in the housings 411 and 412, respectively.

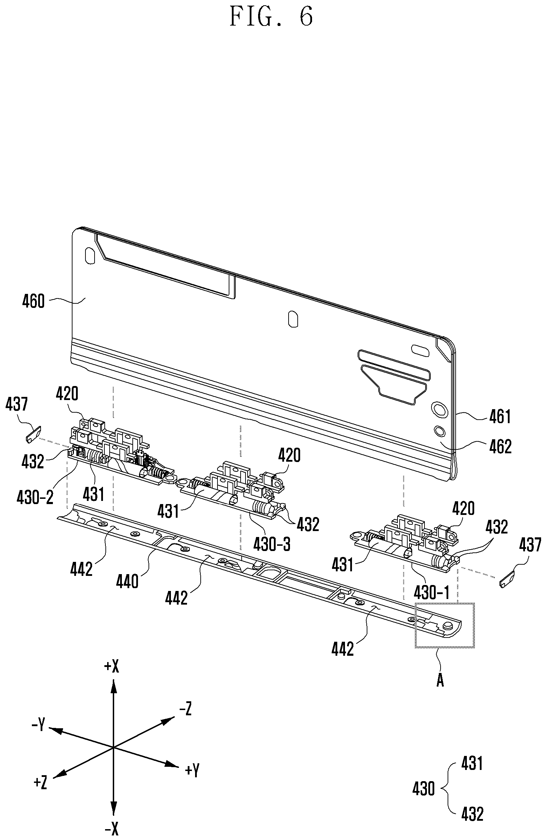

With reference to FIG. 4, the electronic device 400 is illustrated as including one folding axis F, but this is an example and the electronic device 400 may include a plurality of folding axes F. For example, the electronic device 400 may be a multi-foldable electronic device that may be folded or unfolded based on the plurality of folding axes F. The electronic device 400 according to an embodiment may be folded in an in-folding manner or in an out-folding manner based on each of the plurality of folding axes F. The electronic device 400 according to an embodiment may include a plurality of driving members 420. The driving member 420 may be a hinge folded in an in-folding manner or a hinge folded in an out-folding manner. The electronic device 400 according to an embodiment may include a plurality of third housings 440. Each of the plurality of third housings 440 may be disposed at a position corresponding to the driving member 420 folded in an in-folding manner. The electronic device 400 according to an embodiment may include a plurality of fixing members 430, and the plurality of fixing members 430 may each be disposed at a position corresponding to the third housing 440. Each of the plurality of fixing members 430 may include a protruding part 432 (see FIG. 6).

In an embodiment, in the case that the electronic device 400 includes a plurality of folding axes F, some folding axes may not be provided with the protruding part 432 (see FIG. 6) according to the embodiment of the disclosure. In an embodiment, a hinge device for in-folding may be provided with a protruding part 432 (see FIG. 6), and a hinge device for out-folding may not be provided with a protruding part 432 (see FIG. 6).

FIG. 6 is a diagram illustrating a driving member 420, a fixing member 430, a third housing 440, and a display 460 according to an embodiment of the disclosure.

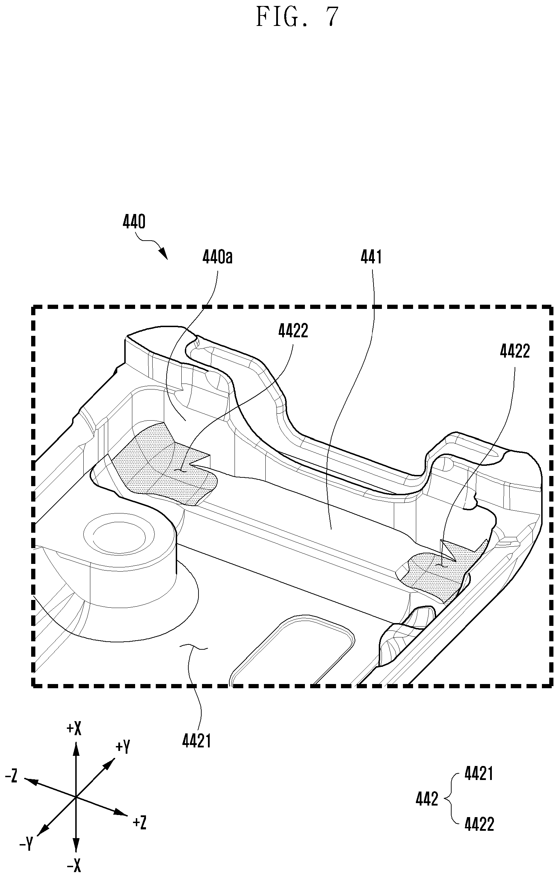

FIG. 7 is a diagram illustrating a third housing 440 according to an embodiment of the disclosure. FIG. 7 is an enlarged view of an area A of the third housing 440 illustrated in FIG. 6.

In an embodiment, driving member 420 and fixing member 430 may form (or be included in) a hinge assembly configured to enable folding of the foldable display 460 along folding axis F. For example, electronic device 400 may include the foldable display 460, the hinge assembly, and a housing (e.g. third housing 440) configured to receive at least a portion of the hinge assembly. The hinge assembly may comprise a protruding part 432 protruding from an end surface of the hinge assembly towards a first inner side surface of the housing, wherein the end surface and first inner side surface are perpendicular to the direction of the folding axis.

In an embodiment, the fixing member 430 may be disposed in the third housing 440. The fixing member 430 may be disposed in a seating space 442 of the third housing 440. The fixing member 430 may be configured to fix the driving member 420 (or the hinge assembly) to the third housing 440.

In an embodiment, the fixing member 430 may include a body 431 and/or a protruding part 432. The body 431 of the fixing member 430 may be an area that supports the driving member 420.

In an embodiment, the protruding part 432 may be protruded from a distal end surface of the fixing member 430 in a length direction (e.g., +Y direction or -Y direction, or a direction parallel to the folding axis F) of the fixing member 430. For example, the protruding part 432 may be an area extended from at least a portion of the distal end of the body 431. For example, the distal end surface of the fixing member 430 (or body 431) may be a surface perpendicular to the direction of the folding axis F.

In describing the third housing 440 according to an embodiment of the disclosure, a length direction of the third housing 440 may mean the Y-axis direction (e.g. the direction of the folding axis F), and a width direction thereof may mean the Z-axis direction. A height direction of the third housing 440 may mean the X-axis direction.

In an embodiment, the driving member 420 may be disposed at one side (e.g., positive X-axis direction) of the fixing member 430. The driving member 420 may be supported by the body 431 of the fixing member 430.

In an embodiment, the fixing member 430 may be (or include) a support member that supports the driving member 420.

In an embodiment, the electronic device 400 may include one or more hinge assemblies that change a state of the display 460 to a folded state or an unfolded state. Each of the one or more hinge assemblies may include a driving member 420 and/or a fixing member 430.

In an embodiment, at least one driving member 420 may be connected to a portion of the housing 410 through a coupling member (e.g., screw, bolt) (not illustrated).

In an embodiment, at least one driving member 420 may be attached to a portion of the display 460 through an adhesive member (e.g., double-sided tape, bond) (not illustrated).

In an embodiment, the driving member may be configured to perform a rotation function. For example, the driving member 420 may be (or include, or correspond to) a shaft that performs a rotation function in the hinge assemblies. In an embodiment, the fixing member 430 may be (or include, or correspond to) a bracket that performs a function of supporting the shaft in the hinge assemblies.

In an embodiment, the display 460 may be disposed at one side (e.g., positive X-axis direction) of the driving member 420. At least a portion of the display 460 may be disposed in the driving member 420.

In an embodiment, the display 460 may include a first display unit 461 and/or a second display unit 462. The first display unit 461 and the second display unit 462 may be positioned with the third housing 440 therebetween.

In an embodiment, the electronic device 400 may include at least one driving member 420. For example, the electronic device 400 may include a plurality of driving members 420.

In an embodiment, the protruding part 432 may be formed in the driving member 420.

In an embodiment, the protruding part 432 may be formed in a part of the hinge assembly of the electronic device 400 or in a component (e.g., filling member, display support member, and the like) other than the hinge assembly.

FIG. 6 illustrates that the electronic device 400 includes three hinge assemblies, three driving members 420, and three fixing members 430, but this is an example and the number of hinge assemblies, driving members 420, and fixing members 430 may not be limited thereto.

In an embodiment, the plurality of hinge assemblies, driving members 420, and/or fixing members 430 may each be disposed to be spaced apart in a length direction (e.g., Y-axis direction or folding axis F direction) of the third housing 440.

In an embodiment, at least one fixing member 430 may be disposed in the third housing 440. For example, a plurality of fixing members 430 may each be disposed in the third housing 440.

In an embodiment, the fixing member 430 may include a first fixing member 430-1, a second fixing member 430-2, and/or a third fixing member 430-3.

In an embodiment, the second fixing member 430-2 may be disposed to face different surfaces from those of the first fixing member 430-1. For example, the first fixing member 430-1 may be disposed to face a first surface 440a (see FIG. 7) of the third housing 440, and the second fixing member 430-2 may be disposed to face a surface formed at the opposite side of the first surface 440a (see FIG. 7) in the third housing 440.

In an embodiment, the third fixing member 430-3 may be disposed between the first fixing member 430-1 and the second fixing member 430-2.

In an embodiment, the second fixing member 430-2 (or second hinge assembly) may include a structure symmetrical to the first fixing member 430-1 (or first hinge assembly). The second fixing member 430-2 (or second hinge assembly) may include the same protruding part 432 as that of the first fixing member 430-1 (or first hinge assembly) or a protruding part 432 similar to that of the first fixing member 430-1 (or first hinge assembly).

In an embodiment, the first fixing member 430-1 and the second fixing member 430-2 (or first hinge assembly and second hinge assembly) may each include a protruding part 432. The number of protruding parts 432 of each of the first fixing member 430-1 and the second fixing member 430-2 (or first hinge assembly and second hinge assembly) may be different. The protruding parts 432 of each of the first fixing member 430-1 and the second fixing member 430-2 (or first hinge assembly and second hinge assembly) may have different shapes.

In an embodiment, the third fixing member 430-3 (or third hinge assembly) may not include a structure symmetrical to the first fixing member 430-1 or the second fixing member 430-2 (or first hinge assembly/second hinge assembly). For example, the third fixing member 430-3 (or third hinge assembly) may not include the same protruding part 432 as that of the first fixing member 430-1 (or first hinge assembly) or a protruding part 432 similar to that of the first fixing member 430-1 (or first hinge assembly).

In an embodiment, the third housing 440 may include a plurality of seating spaces 442 in which the fixing member 430 may be seated.

FIG. 6 illustrates that three fixing members 430 are disposed in the third housing 440, but this is an example, and the number of fixing members 430 may not be limited thereto.

In an embodiment, the plurality of fixing members 430 may each serve to support the driving member 420 disposed in the fixing member 430.

In an embodiment, the fixing member 430 may serve as the center of rotation when at least a portion of the display 460 connected to the driving member 420 rotates. For example, the first display unit 461 and the second display unit 462 of the display 460 may each rotate around the fixing member 430.

In an embodiment, the fixing member 430 may serve to rotate at least a portion of the display 460 while supporting to predetermined strength when at least a portion of the display 460 rotates. For example, the fixing member 430 may support at least a portion of the display 460 so that the display 460 may rotate while receiving resistance to rotation by predetermined strength.

In an embodiment, the fixing member 430 may serve to fix the display 460 so that the display 460 may maintain a specific angle in the case that at least a portion of the display 460 rotates at a predetermined angle or more.

In an embodiment, each of the plurality of fixing members 430 may be produced in substantially the same shape. For example, each of the plurality of fixing members 430 may include a protruding part 432 regardless of a position disposed in the third housing 440. In the case that the plurality of fixing members 430 are produced in substantially the same shape, the cost and time for producing the fixing members 430 may be reduced.

In an embodiment, a side cover member 437 may be disposed in the third housing 440. The side cover member 437 may be disposed at both distal ends (e.g., a distal end in the positive Y-axis direction and a distal end in the negative Y-axis direction) of the third housing 440. The side cover member 437 may be a member extended from both distal ends of the third housing 440 in a height direction (e.g., X-axis direction) of the third housing 440. The side cover member 437 may be disposed to overlap with at least a portion of the display 460 at both distal ends of the third housing 440.

With reference to FIG. 7, the third housing 440 according to an embodiment may include a space in which at least a portion of the fixing member 430 may be seated. For example, the third housing 440 may include a seating space 442 in which the fixing member 430 is seated.

In an embodiment, the seating space 442 may include a body seating space 4421 and/or a protruding part seating space 4422. The body 431 of the fixing member 430 may be disposed in the body seating space 4421. The protruding part 432 of the fixing member 430 may be disposed in the protruding part seating space 4422.

In an embodiment, the protruding part seating space 4422 may be formed in a shape in which at least a portion of the third housing 440 is concave so that the protruding part 432 may be disposed. In an embodiment, the protruding part seating space 4422 may be formed in a shape that encloses at least a portion of the protruding part 432.

In an embodiment, the protruding part seating space 4422 may be formed in one direction of the body seating space 4421. For example, with reference to FIG. 7, at least one protruding part seating space 4422 may be formed at a position moved in the length direction (e.g., Y-axis direction) of the third housing 440 based on the body seating space 4421.

In an embodiment, two protruding part seating spaces 4422 may be formed at a distal end portion (e.g., longitudinal distal end portion 441) of the third housing 440. The protruding part 432 of the fixing member 430 may be disposed in each of two protruding part seating spaces 4422 according to an embodiment.

FIG. 7 illustrates that two protruding part seating spaces 4422 are formed, but this is an example, and the number of protruding part seating spaces 4422 may not be limited thereto. For example, the number of protruding part seating spaces 4422 according to an embodiment is not limited to two, and one or a plurality of protruding part seating spaces 4422 may be formed.

In an embodiment, a shape of the protruding part seating space 4422 may vary based on a shape of the protruding part 432. For example, a shape of the protruding part seating space 4422 may be formed in various shapes so that the protruding part 432 may be seated and supported in at least a portion of the third housing 440 according to the shape of the protruding part 432.

In an embodiment, the protruding part 432 may be disposed to face a first surface 440a of the third housing 440. With reference to FIG. 7, the first surface 440a of the third housing 440 may be a surface substantially perpendicular to the length direction (e.g., Y-axis direction) of the third housing 440. For example, the first surface 440a may be an inner side surface of the third housing 440 and may be perpendicular to the direction of the folding axis F.

In an embodiment, the protruding part 432 of the fixing member 430 may be disposed to contact at least a portion of the longitudinal distal end portion 441 of the third housing 440. The longitudinal distal end portion 441 of the third housing 440 may be a portion positioned at a distal end of the third housing 440 in the length direction (e.g., Y-axis direction). For example, with reference to FIG. 7, the longitudinal distal end portion 441 of the third housing 440 may be a portion extended substantially vertically to the first surface 440a of the third housing 440 at the Y-axis direction distal end of the third housing 440. With reference to FIG. 7, the protruding part 432 according to an embodiment may be disposed in the protruding part seating space 4422 formed at the longitudinal distal end portion 441 of the third housing 440. In an embodiment, the protruding part 432 may be fixed to the third housing 440 so as to provide structural strength to the longitudinal distal end portion 441 of the third housing 440. For example, the protruding part 432 may be fixed to the inner side surface of the third housing 440.

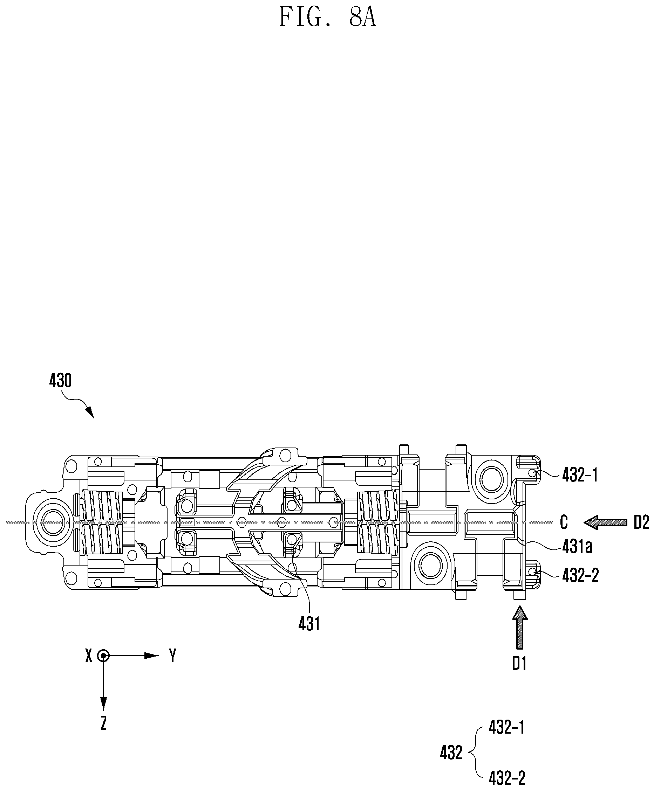

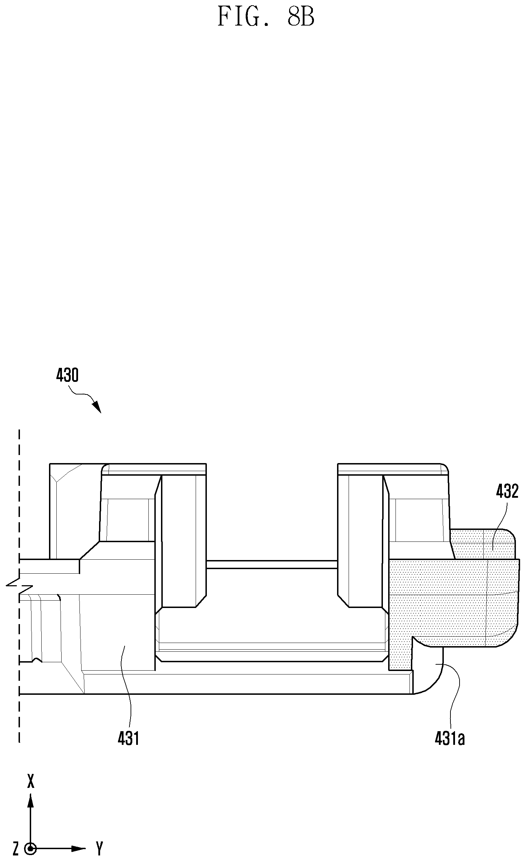

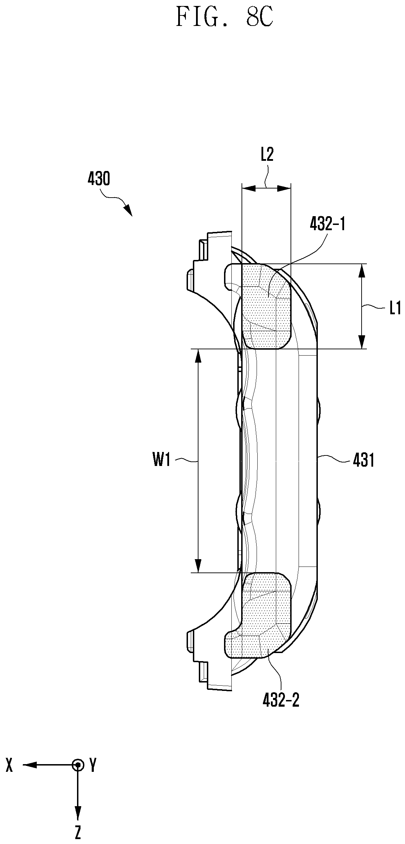

FIGS. 8A, 8B, and 8C are diagrams illustrating a fixing member 430 according to an embodiment of the disclosure.

FIG. 8A is a diagram illustrating a fixing member 430 according to an embodiment. FIG. 8B is a diagram illustrating the fixing member 430 viewed from a first direction D1 of FIG. 8A. FIG. 8C is a diagram illustrating the fixing member 430 viewed from a second direction D2 of FIG. 8A.

In describing the fixing member 430 according to an embodiment of the disclosure, a length direction of the fixing member 430 may mean the Y-axis direction (or the direction of the folding axis F), and a width direction thereof may mean the Z-axis direction. A height direction of the fixing member 430 may mean the X-axis direction.

In an embodiment, the fixing member 430 may include a body 431 and/or a protruding part 432.

In an embodiment, the body 431 of the fixing member 430 may be extended along the length direction (e.g., Y-axis direction or folding axis F direction) of the fixing member 430. At least a portion of the driving member 420 (see FIG. 6) may be disposed and supported in the body 431 of the fixing member 430.

In an embodiment, the protruding part 432 may be formed at the distal end 431a of the body 431. For example, with reference to FIGS. 8A and 8C, the protruding part 432 may be extended to protrude in the Y-axis direction (or the direction of the folding axis F) from the distal end 431a of the body 431.

In an embodiment, one side portion of the distal end 431a of the body 431 may mean an area positioned in the positive Z-axis direction based on a center line C among areas of the distal end 431a. The other side portion of the distal end 431a of the body 431 may mean an area positioned in the negative Z-axis direction based on the center line C among areas of the distal end 431a.

With reference to FIG. 8A, in an embodiment, two protruding parts 432 may be formed at the distal end 431a of the body 431. According to an embodiment, one protruding part 432 of two protruding parts 432 may be extended from one side part of the distal end 431a of the body 431, and the other protruding part 432 may be extended from the other side part of the distal end 431a of the body 431.

The protruding part 432 is not limited to be extended from the other side part of the distal end 431a of the body 431, and the protruding part 432 according to an embodiment may be extended from an area other than the distal end 431a of the body 431. For example, the protruding part 432 according to an embodiment may be extended from a partial area of the body 431 positioned before the distal end 431a of the body 431. The protruding part 432 according to an embodiment may be bonded to a partial area of the body 431 positioned before the distal end 431a of the body 431.

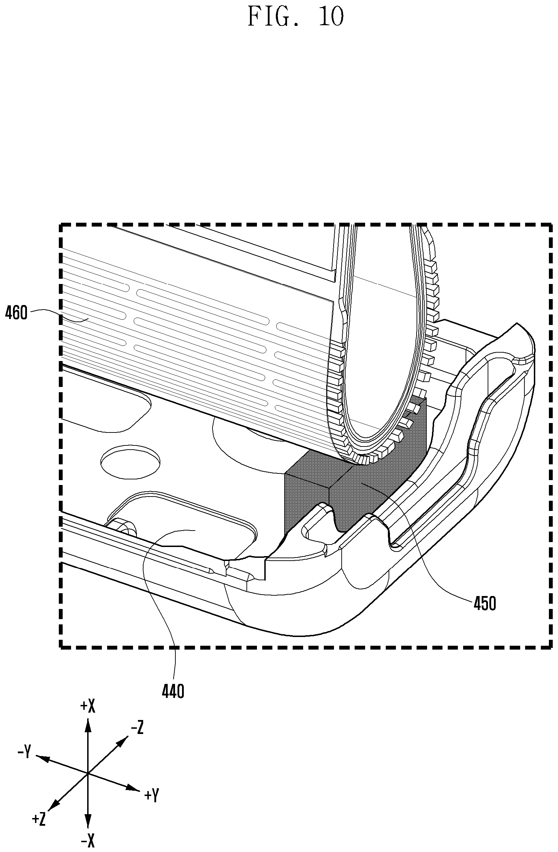

With reference to FIGS. 8A and 8C, in an embodiment, two protruding parts 432 may be disposed to be spaced apart from each other in a direction perpendicular to the folding axis F. For example, two protruding parts 432 may be disposed to be spaced apart from each other in a width direction (e.g., Z-axis direction) of the fixing member 430. Because two protruding parts 432 according to an embodiment are disposed to be spaced apart, a space in which another component (e.g., the filling member 450, see FIG. 10) may be disposed between the two protruding parts 432 may be formed.

With reference to FIG. 8A, the protruding part 432 according to an embodiment may include a first protruding part 432-1 and/or a second protruding part 432-2. With reference to FIG. 8C, the first protruding part 432-1 may be positioned to be spaced apart from the second protruding part 432-2 by a first distance W1.

In an embodiment, when the electronic device 400 and the display 460 are in an unfolded state, the first protruding part 432-1 may be disposed under the first display unit 461, and the second protruding part 432-2 may be disposed under the second display unit 462. For example, the foldable display may comprise a first display portion on a first side of the folding axis F and a second display portion on a second side of the folding axis F, and, when the foldable display is in an unfolded state, the first protruding part may be disposed under the first display portion, and the second protruding part may be disposed under the second display portion.

In an embodiment, two protruding parts 432 may be each extended to have a predetermined length in the width direction (e.g., Z-axis direction) and the height direction (e.g., X-axis direction) of the fixing member 430. For example, with reference to FIG. 8C, the protruding part 432 may be extended in the width direction of the fixing member 430 by a first length L1. The protruding part 432 may be extended in the height direction of the fixing member 430 by a second length L2.

In an embodiment, the first length L1 and the second length L2 of the protruding part 432 may be formed to a predetermined length or more in order for the protruding part 432 to effectively support the third housing 440. According to an embodiment, the first length L1 may be approximately 1.9 mm or more. According to an embodiment, the second length L2 may be approximately 1.6 mm or more.

In an embodiment, the protruding part 432 may be formed integrally with the body 431. For example, the protruding part 432 according to an embodiment may be produced integrally with the body 431 and be extended from the distal end 431a of the body 431.

In an embodiment, the protruding part 432 may be produced separately from the body 431 and then bonded. For example, the body 431 and the protruding part 432 according to an embodiment may each be formed through separate producing processes. A separately produced protruding part 432 may be bonded to the distal end 431a of the body 431. In an embodiment, the body 431 and the protruding part 432 may be bonded using a welding method. Alternatively, the body 431 and the protruding part 432 may be bonded using a separate fastening member (e.g., bolt, rivet).

In an embodiment, the protruding part 432 may be configured to have greater yield strength than the inner side surface of the third housing 440 and/or the end surface of the hinge assembly (or fixing member 430 or body 431). The protruding part 432 may be formed of a different material than the inner side surface of the third housing 440 and/or the end surface of the hinge assembly (or fixing member 430 or body 431).

In an embodiment, in the case that the protruding part 432 is produced separately from the body 431 and then bonded, the protruding part 432 may include a material having higher yield strength than that of the body 431. The protruding part 432 may include a material different from that of the body 431.

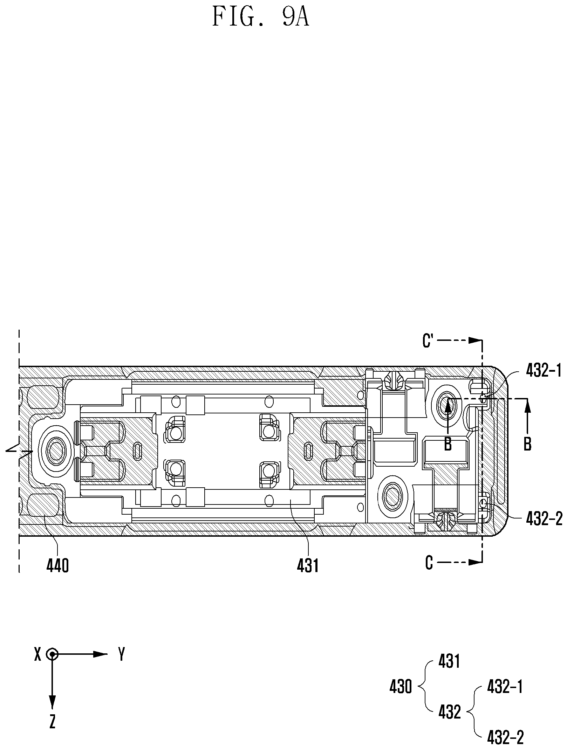

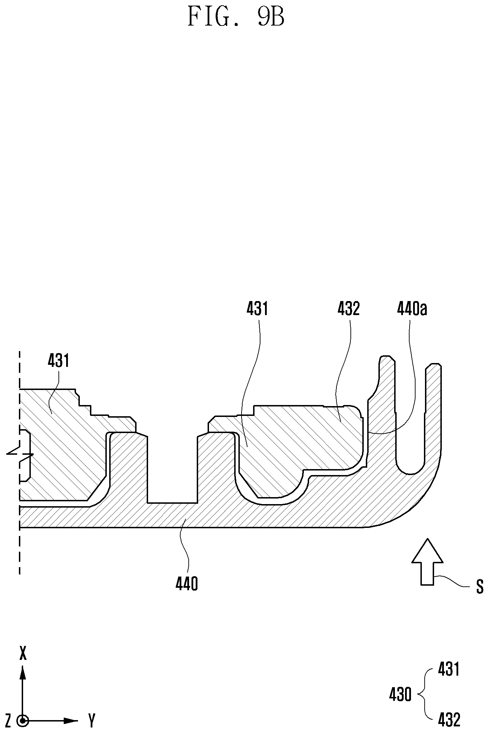

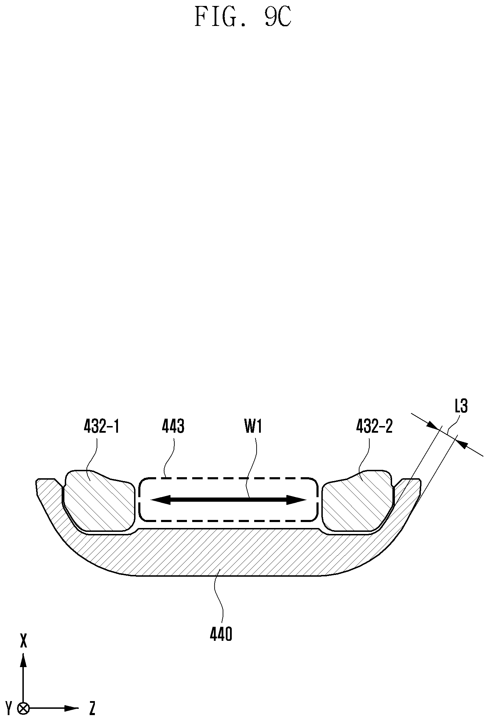

FIGS. 9A, 9B, and 9C are diagrams illustrating the third housing 440 and the fixing member 430 according to an embodiment of the disclosure.

FIG. 9A is a diagram illustrating the fixing member 430 disposed in the third housing 440. FIG. 9B is a diagram illustrating the third housing 440 and the fixing member 430 viewed from a cross section B-B' illustrated in FIG. 9A. FIG. 9C is a diagram illustrating the third housing 440 and the fixing member 430 viewed from a cross section C-C' illustrated in FIG. 9A.

In an embodiment, the fixing member 430 may be disposed in the third housing 440. For example, the body 431 and the protruding part 432 of the fixing member 430 may each be disposed in the third housing 440.

In an embodiment, the fixing member 430 may include a material having higher yield strength than that of the third housing 440. For example, the third housing 440 may include an aluminum material in consideration of ease of processing. According to an embodiment, yield strength of the aluminum material included in the third housing 440 may be approximately 400 MPa to 500 MPa. The fixing member 430 may include a stainless steel material having higher yield strength than that of the aluminum material. According to an embodiment, yield strength of stainless steel included in the fixing member 430 may be approximately 700 MPa to 800 MPa.

In an embodiment, the protruding part 432 of the fixing member 430 includes a material having higher yield strength than that of the third housing 440 and supports the third housing 440; thus, even if the thickness of the third housing 440 is not increased, deformation of the third housing 440 due to an external impact may be reduced.

In an embodiment, the protruding part 432 of the fixing member 430 may serve to support at least a part of the third housing 440 in order to prevent the third housing 440 from being deformed when an external impact S is applied to the third housing 440. For example, with reference to FIG. 9B, in the case that an external impact S is applied to the third housing 440 in a height direction (e.g., X-axis direction) of the third housing 440, the protruding part 432 may support the third housing 440 in the height direction (e.g., -X-axis direction) of the third housing 440. Because the protruding part 432 supports the third housing 440, the third housing 440 may be reduced or prevented from being deformed due to an external impact S.

With reference to FIG. 9B, a portion of the third housing 440 in which the body 431 and the protruding part 432 of the fixing member 430 are seated may be formed in a concave shape.

With reference to FIG. 9B, a length in which the protruding part 432 is extended in the height direction (e.g., X-axis direction) on a cross section perpendicular to a width direction (e.g., Z-axis direction) of the third housing 440 may be formed to be small compared to a length in which the body 431 is extended.

With reference to FIGS. 9A and 9C, in an embodiment, two protruding parts 432-1 and 432-2 may be disposed at a distance from each other in the third housing 440 in the width direction (e.g., Z-axis direction) of the third housing 440. Because two protruding parts 432-1 and 432-2 according to an embodiment are disposed at a distance (e.g., first distance W1), a separation space 443 may be formed between the two protruding parts 432.

In an embodiment, a portion of the third housing 440 in which the protruding part 432 is disposed may be formed to a predetermined thickness or more. For example, with reference to FIG. 9C, in an area in contact with the protruding part 432, a portion of the third housing 440 may have a thickness of the third length L3 or more. In an embodiment, the third length L3 may be approximately 0.5 mm or more.

In an embodiment, a portion of the third housing 440 in which the protruding part 432 is disposed may have a minimum thickness (e.g., third length L3) for reducing or preventing the third housing 440 from being damaged or deformed as the protruding part 432 supports an external impact.

With reference to FIG. 9C, the protruding part 432 may be formed in a shape corresponding to the third housing 440. For example, in the case that a portion of the third housing 440 has a curved extended portion on a cross-section substantially perpendicular to a length direction (e.g., Y-axis direction) of the third housing 440, a portion of the protruding part 432 may be also extended to a curve of a corresponding shape on a cross-section substantially perpendicular to the length direction (e.g., Y-axis direction) of the third housing 440.

FIG. 10 is a diagram illustrating the third housing 440, the filling member 450, and the display 460 according to an embodiment of the disclosure.

In an embodiment, the electronic device 400 may include a filling member 450. For example, the filling member 450 may be disposed in the third housing 440.

In an embodiment, the filling member 450 may be a space filling member that fills a predetermined space, an elastic member with elasticity, a blocking member that blocks external foreign materials, a dust inflow prevention member that prevents external dust from flowing into the third housing 440, and/or a filter member that serves as a filter or may include the filling member, the elastic member, the blocking member, the dust inflow prevention member, the filter member, and/or woven fibers. The filling member may perform more than one of the functions listed above. For example, the filling member may function as any combination of a space filling member, an elastic member, a blocking member, a dust inflow prevention member, and a filter member. For example, the filling member 450 may be expressed as a filler.

In an embodiment, the filling member 450 may be (or include) a member with a dustproof function. For example, the filling member 450 may be (or include) a blocking member or a dust inflow prevention member that serves to block or reduce foreign materials from flowing into the electronic device 400. The filling member 450 may serve to block or reduce foreign materials from flowing into the display 460. In an embodiment, the filling member 450 may serve to block or reduce foreign materials of a predetermined size or less from flowing into the electronic device 400.

In an embodiment, the filling member 450 may be (or include) a filter member serving as a filter for reducing inflow of external foreign materials.

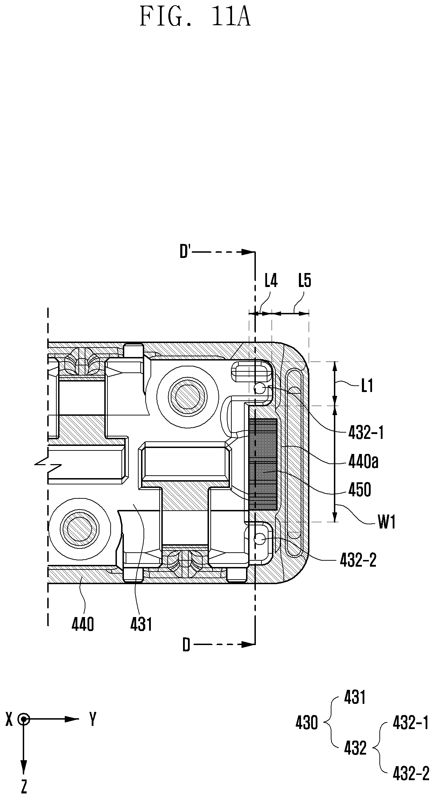

In an embodiment, the filling member 450 may be (or include) a space filling member that fills a portion of a space formed in the third housing 440. For example, the filling member 450 may fill a portion of the space of the third housing 440 and serve as a spacer that enables a component (e.g., the fixing member 430, see FIG. 11A) disposed in the third housing 440 to maintain a predetermined position.

In an embodiment, the filling member 450 may include a substrate portion and a fiber portion. The substrate portion of the filling member 450 may include a plate shape made of plastic and/or polymer. The fiber portion of the filling member 450 may be a portion woven on the substrate portion and disposed in a predetermined arrangement. The fiber portion of the filling member 450 may be formed to have elasticity. In an embodiment, the filling member 450 may be an elastic member formed to have elasticity.

In an embodiment, the filling member 450 may be composed of a plurality of aggregates including a plurality of fibers. One aggregate may be inserted into and fixed to one sac or hole. One aggregate may be composed of a predetermined number of fibers.

In an embodiment, the filling member 450 may include a rubber, resin, or plastic material.

In an embodiment, the filling member 450 may be attached to the housing (e.g., the housing 410 or the third housing 440) through an adhesive member (e.g., adhesive tape, adhesive material, and the like).

In an embodiment, the filling member 450 may be coupled to the housing (e.g., the housing 410 or the third housing 440) or the housing (e.g., the housing 410 or the third housing 430) or the fixing member 430 through a groove formed in the fixing member 430.

In an embodiment, the filling member 450 may be adhered to the housing (e.g., the housing 410 or the third housing 440), but may not be adhered to the fixing member 430.

In an embodiment, the filling member 450 may include a member (e.g., sweeper) that may reduce dust inflow and a member (e.g., spacer) that may support peripheral components. In an embodiment, the sweeper may include a fiber material. In an embodiment, the spacer may include a rubber, resin, or plastic material. The spacer may be disposed in a space between the fixing member 430 and the third housing 440. The sweeper may be disposed to cover the spacer or to fill a space formed in the spacer. In an embodiment, the spacer may have a shape "⊏" facing the third housing 440, and the sweeper may be inserted into a space within the spacer or cover a space within the spacer. In an embodiment, the spacer may replace or supplement the protruding part 432. In an embodiment, the spacer may be formed in a similar size and shape as that of the protruding part 432 described in this disclosure.

In an embodiment, the filling member 450 may be disposed between the third housing 440 and the display 460.

In an embodiment, one surface of the filling member 450 may mean a surface facing a positive x-axis direction in the filling member 450, and the other surface of the filling member 450 may mean a surface facing a negative x-axis direction in the filling member 450.

In an embodiment, the filling member 450 may contact the display 460 at one surface thereof and contact the third housing 440 at the other surface thereof.

FIG. 10 illustrates that the filling member 450 has a rectangular parallelepiped shape, but this is an example for description, and the shape of the filling member 450 may not be limited thereto. For example, the filling member 450 may include a curved surface in at least a part thereof.

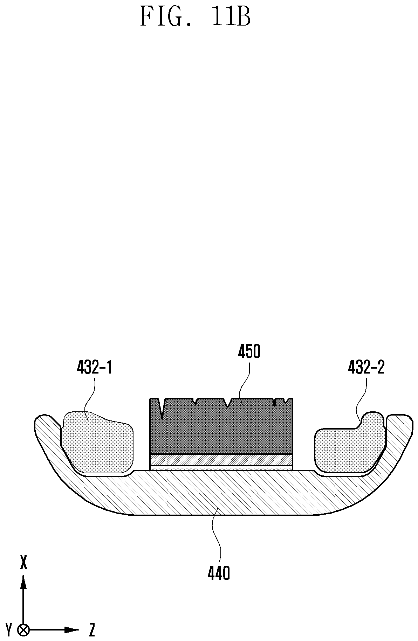

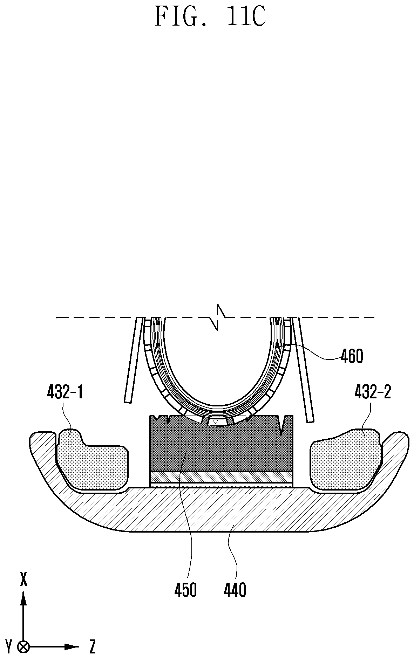

FIGS. 11A, 11B, and 11C are diagrams illustrating the third housing 440, the fixing member 430, and the filling member 450 according to an embodiment of the disclosure.

FIG. 11A is a diagram illustrating the fixing member 430 and the filling member 450 disposed in the third housing 440. FIG. 11B is a diagram illustrating the third housing 440, the fixing member 430, and the filling member 450 viewed from a cross section D-D' illustrated in FIG. 11A. FIG. 11C is a diagram illustrating the third housing 440, the fixing member 430, the filling member 450, and the display 460 viewed from a cross section D-D' illustrated in FIG. 11A.

With reference to FIG. 11A, the protruding part 432 may have a width equal to a first length L1. According to an embodiment, the first length L1 may be approximately 1.9 mm or more. The protruding part 432 may be extended to protrude compared to the body 431 by a fourth length L4. According to an embodiment, the fourth length L4 may be approximately 1.0 mm or more.

With reference to FIG. 11A, a distal end of the protruding part 432 may be disposed at a distance equal to a fifth length L5 compared to a distal end of the third housing 440. According to an embodiment, the fifth length L5 may be approximately 0.5 mm or more.

In an embodiment, the distal end of the protruding part 432 may be disposed to contact at least a partial surface (e.g., 440a) of an inner surface of the third housing 440.

In an embodiment, at least a portion of the filling member 450 may be disposed at a space (e.g., the space 443 of FIG. 9C) between two protruding parts 432-1 and 432-2. For example, because two protruding parts 432 according to an embodiment are disposed to be spaced apart (e.g., the first distance W1) from each other in a width direction (e.g., Z-axis direction) of the third housing 440, a space (e.g., the separation space 443 of FIG. 9C) may be formed between the two protruding parts 432-1 and 432-2 in the third housing 440. A filling member 450 may be disposed in a space (e.g., the separation space 443 of FIG. 9C) formed between the two protruding parts 432-1 and 432-2 in the third housing 440.

In an embodiment, at least a portion of the filling member 450 may be attached to at least a portion of the first surface 440a of the third housing 440, the fixing member 430, or the protruding part 432.

In an embodiment, the filling member 450 may be disposed to be spaced apart from the fixing member 430. For example, the filling member 450 may be disposed to be spaced apart from the two protruding parts 432-1 and 432-2 of the fixing member 430.

FIG. 11A illustrates that the filling member 450 and the two protruding parts 432-1 and 432-2 are disposed spaced apart from each other, but this is an example, and the disposition of the filling member 450 may not be limited thereto. For example, in an embodiment, the filling member 450 may be disposed to be sandwiched between two protruding parts 432-1 and 432-2. Alternatively, in an embodiment, the filling member 450 may be disposed to at least partially overlap with the two protruding parts 432-1 and 432-2.

With reference to FIG. 11A, the filling member 450 may be disposed between a distal end surface of the fixing member 430 and the first surface 440a of the third housing 440.

According to an embodiment, the filling member 450 may be formed to cover or enclose the protruding parts 432-1 and 432-2.

According to an embodiment, the filling member 450 may include a groove or hole capable of receiving the protruding parts 432-1 and 432-2.

With reference to FIGS. 11A and 11B, in an embodiment, the filling member 450 may be disposed to be spaced apart from each of two protruding parts 432-1 and 432-2 in a width direction (e.g., Z-axis direction) of the third housing 440.

The disposition of the filling member 450 illustrated in FIGS. 11A and 11B is an example, and the disposition of the filling member 450 may not be limited thereto. For example, in an embodiment, the filling member 450 may not be disposed to be spaced apart from each of the two protruding parts 432, but may be disposed to contact each of the two protruding parts 432-1 and 432-2.

With reference to FIG. 11C, at least a portion of the filling member 450 may contact the display 460. For example, at least a portion of a surface of the filling member 450 facing an opposite direction of the third housing 440 may contact the display 460. The filling member 450 may serve to block or reduce external foreign materials from flowing into one surface of the display 460 (e.g., the surface facing the third housing 440 from the display 460).

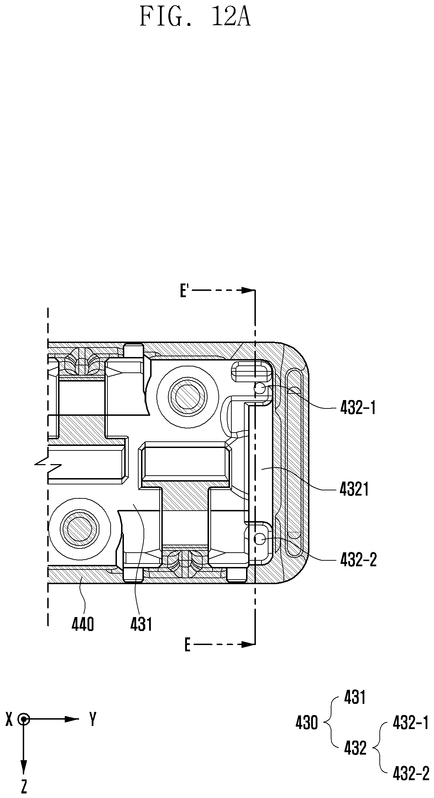

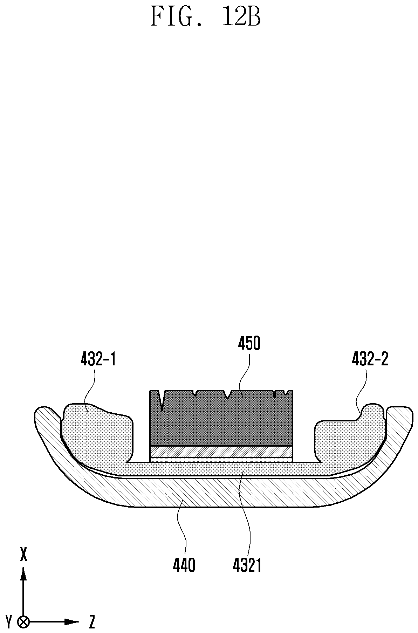

FIGS. 12A and 12B are diagrams illustrating a fixing member 430 including a connecting part 4321 according to an embodiment of the disclosure.

FIG. 12A is a diagram illustrating a fixing member 430 including a connecting part 4321. FIG. 12B is a diagram illustrating the fixing member 430 and the third housing 440 viewed from a cross section E-E' illustrated in FIG. 12A. FIG. 12B is a diagram illustrating a state in which a filling member 450 is added to the fixing member 430 and the third housing 440 illustrated in FIG. 12A.

With reference to FIGS. 12A and 12B, the fixing member 430 (or hinge assembly) may include a connecting part 4321 extended between two protruding parts 432-1 and 432-2.

In an embodiment, the connecting part 4321 may be extended in a width direction (e.g., Z-axis direction) of the fixing member 430 between two protruding parts 432-1 and 432-2 and be an area connecting the two protruding parts 432-1 and 432-2. For example, the connection part 4321 may connect the first protruding part 432-1 and the second protruding part 432-2 at the distal end of the fixing member 430. For example, the connecting part 4321 may be configured to connect the first protruding part 432-1 and the second protruding part 432-2. For example, the connecting part 4321 may be connected at the end surface of the hinge assembly.

In an embodiment, at least a portion of the filling member 450 and at least a portion of the connecting part 4321 may be stacked between the third housing 410 and the display 460. For example, with reference to FIG. 12B, the connecting part 4321 may be disposed between the third housing 440 and the filling member 450. A filling member 450 may be disposed at one surface of the connecting part 4321 (e.g., a surface of the connecting part 4321 facing the positive X-axis direction). At least a portion of the third housing 440 may be disposed at the other surface, which is an opposite surface to one surface of the connecting part 4321.

With reference to FIG. 12B, the connecting part 4321 may have a smaller height than that of a first protruding part 432-1 and a second protruding part 432-2 when viewed from the first surface 440a (see FIG. 11A) of the third housing 440 (e.g., when viewed in the Y-axis direction).

With reference to FIG. 12B, at least a portion of the connecting part 4321 and the filling member 450 may be disposed to be stacked in a height direction (e.g., X-axis direction) of the fixing member 430 when viewed from the first surface 440a (see FIG. 11A) of the third housing 440 (e.g., when viewed in the Y-axis direction).

In an embodiment, the connecting part 4321 may contact the first surface 440a (see FIG. 11A) of the third housing 440.

In an embodiment, the filling member 450 may contact the display 460 (see FIG. 11C) at one surface. The filling member 450 may serve to block or reduce external foreign materials from flowing into the display 460 (see FIG. 11C).

In an embodiment, the connecting part 4321 of the fixing member 430 may include a material having higher yield strength than that of the third housing 440 and/or the fixing member 430.

In an embodiment, the connecting part 4321 may serve to support the third housing 440. The connecting part 4321 may serve to support the third housing 440 so that the third housing 440 is not deformed when an external impact is applied to the third housing 440. Because the connecting part 4321 supports the third housing 440, the third housing 440 may be reduced or prevented from being deformed due to an external impact.

In an embodiment, the connecting part 4321 and/or the protruding part 432 may be formed integrally with the fixing member 430 (e.g., the body 431). For example, the connecting part 4321 and/or the protruding part 432 according to an embodiment may be produced integrally with the body 431 of the fixing member 430.

In an embodiment, the connecting part 4321 and/or the protruding part 432 may be produced separately from the fixing member 430 (e.g., the body 431) and then bonded to the fixing member 430. For example, in an embodiment, the connecting part 4321 and/or the protruding part 432 may be formed through a separate producing process from the body 431 and then bonded to the body 431. The connecting part 4321 and/or the protruding part 432 and the body 431 may be bonded using a welding method. Alternatively, the connecting part 4321 and/or the protruding portion 432 and the body 431 may be bonded using a separate fastening member (e.g., bolt, rivet).

In an embodiment, the connecting part 4321 and the protruding part 432 may be produced separately and then bonded to each other. The connecting part 4321 and the protruding portion 432 may be bonded using a welding method. Alternatively, the connecting part 4321 and the protruding portion 432 may be bonded using a separate fastening member (e.g., bolt, rivet).

In an embodiment, the connecting part 4321, the protruding part 432, and the body 431 may include substantially the same material.

In an embodiment, the connecting part 4321, the protruding part 432, and the body 431 may include different materials.

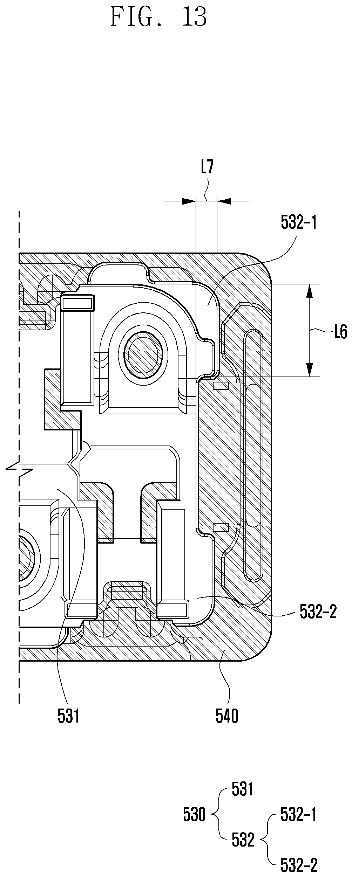

FIG. 13 is a diagram illustrating a fixing member 530 and a third housing 540 according to an embodiment of the disclosure.

The fixing member 530 and the third housing 540 illustrated in FIG. 13 may have substantially the same function as that of the fixing member 430 and the third housing 440 illustrated in FIG. 11A.

In an embodiment, the fixing member 530 may include a body 531 and/or a protruding part 532. According to an embodiment, the protruding part 532 may include a first protruding part 532-1 and/or a second protruding part 532-2.

In an embodiment, the protruding part 532 of FIG. 13 may have a longer width than that of the protruding part 432 of FIG. 11A. For example, the protruding part 532 may be extended to have a width equal to a sixth length L6. According to an embodiment, the sixth length L6 may be approximately 3.1 mm or more. The sixth length L6 may be longer than the first length L1 (see FIG. 11A).

The fixing member 530 according to an embodiment may have a length different from that of the fixing member 430 and the protruding part 432 of FIG. 11A. In an embodiment, the protruding part 532 of FIG. 13 may be extended to protrude in a shorter length from the body 531 compared to the protruding part 432 of FIG. 11A. For example, the protruding part 532 may be extended to protrude from the body 531 by a seventh length L7. According to an embodiment, the seventh length L7 may be approximately 0.7 mm or more. For example, the seventh length L7 may be shorter than the fourth length L4 (see FIG. 11A).

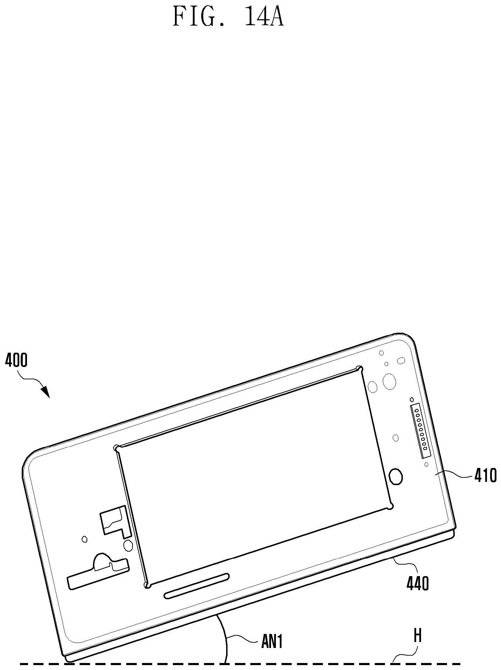

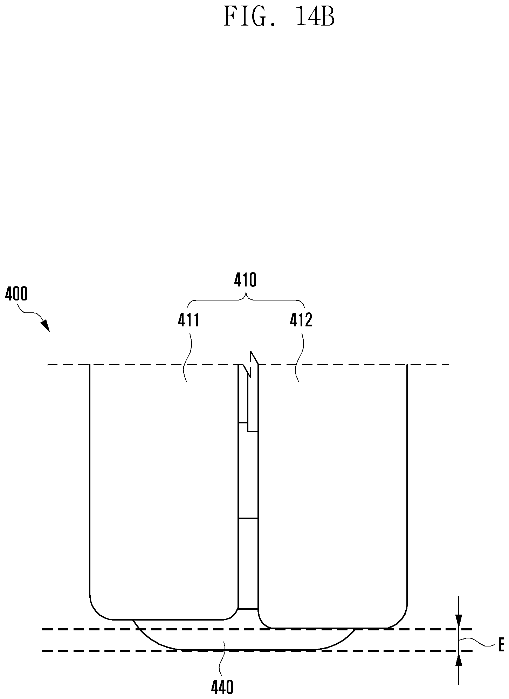

FIGS. 14A and 14B are diagrams illustrating a deformation amount E of the third housing 440 due to a drop of the electronic device 400 in a folded state of the electronic device 400 according to an embodiment of the disclosure.

The electronic device 400 illustrated in FIGS. 14A and 14B may be an electronic device 400 in which a fixing member 430 including a protruding part 432 is disposed in a third housing 440.

With reference to FIG. 14A, the electronic device 400 may be dropped at a first angle AN1 based on a horizontal plane H. With reference to FIGS. 14A and 14B, the electronic device 400 may be dropped at a first angle AN1 based on the horizontal plane (H) in a folded state (e.g., a state in which the first housing 411 and the second housing 412 face each other) thereof. In an embodiment, the first angle AN1 may be approximately 15 degrees.

The electronic device 400 dropped at a first angle AN1 based on the horizontal surface H may collide with the horizontal surface H to receive an impact. With reference to FIG. 14B, when the electronic device 400 collides with the horizontal surface H, the third housing 440 of the electronic device 400 may be deformed, and a deformation amount E of the third housing 440 may be measured.

In an embodiment, a measured value of a deformation amount E of the electronic device 400 including the fixing member 430 in which the protruding part 432 is formed may be reduced compared to the electronic device 400 that does not include the protruding part 432. For example, the measured value of a deformation amount E of the electronic device 400 including the fixing member 430 in which the protruding part 432 is formed may be approximately 0.95 mm, and a measured value of a deformation amount E of the electronic device 400 that does not include the protruding part 432 may be approximately 1.096 mm.

The electronic device 400 according to an embodiment of the disclosure includes a fixing member 430 in which the protruding part 432 is formed; thus, a deformation amount E of the third housing 440 may be reduced. In the electronic device 400 according to an embodiment of the disclosure, a deformation amount E of the third housing 440 is reduced; thus, deformation of an appearance of the third housing 440 may be reduced or prevented.

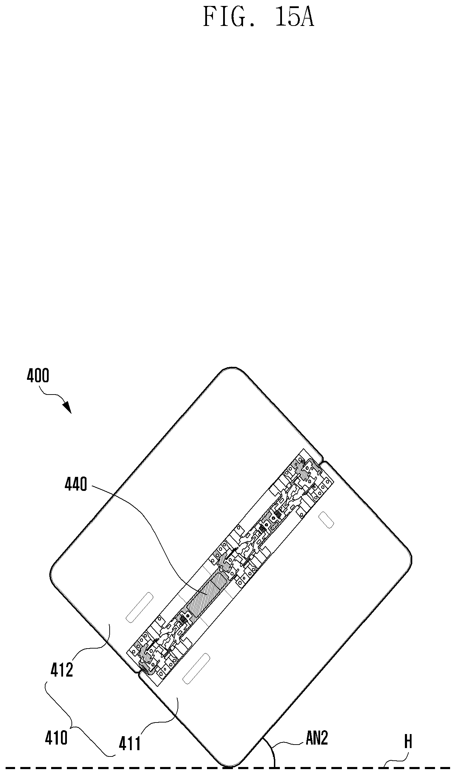

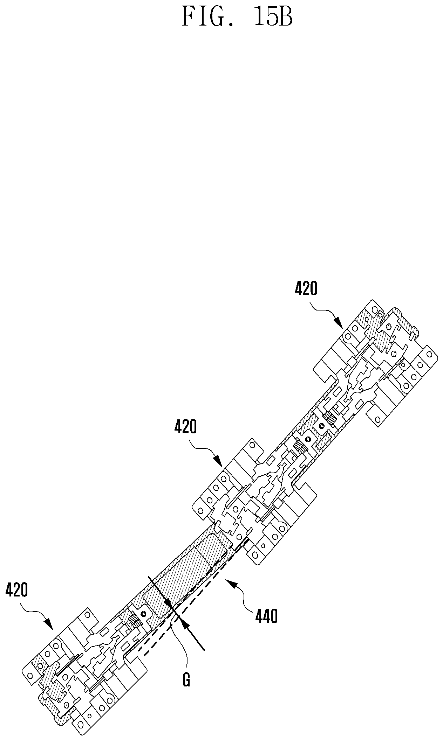

FIGS. 15A and 15B are diagrams illustrating a shear deformation amount G of the third housing 440 due to a drop of the electronic device 400 in an unfolded state of the electronic device 400 according to an embodiment of the disclosure.

The electronic device 400 illustrated in FIGS. 15A and 15B may be an electronic device 400 in which the fixing member 430 (see FIG. 8A) including the protruding part 432 (see FIG. 8A) is disposed in the third housing 440.

With reference to FIG. 15A, the electronic device 400 may be dropped at a first angle AN2 based on the horizontal plane H. With reference to FIG. 15A, the electronic device 400 may be dropped at a second angle AN2 based on the horizontal plane H in the unfolded state (e.g., a state in which the first housing 411 and the second housing 412 are substantially parallel) thereof. In an embodiment, the second angle AN2 may be approximately 45 degrees.

The electronic device 400 dropped at a second angle AN2 based on the horizontal surface H may collide with the horizontal surface H to receive an impact. With reference to FIG. 15B, when the electronic device 400 collides with the horizontal surface H, at least a portion of the third housing 440 of the electronic device 400 may be deformed, and a shear deformation amount G of the third housing 440 may be measured.

In an embodiment, a measured value of a shear deformation amount G of the electronic device 400 including the fixing member 430 (see FIG. 8A) in which the protruding part 432 (see FIG. 8A) is formed may be reduced compared to the electronic device 400 that does not include a protruding part 432 (see FIG. 8A). For example, the measured value of a shear deformation amount G of the electronic device 400 including the fixing member 430 (see FIG. 8A) in which the protruding part 432 (see FIG. 8A) is formed may be approximately 0.55 mm, and a measured value of a shear deformation amount G of the electronic device 400 that does not include the protruding part 432 (see FIG. 8A) may be approximately 0.7 mm.

The electronic device 400 according to an embodiment of the disclosure includes the fixing member 430 (see FIG. 8A) in which the protruding part 432 (see FIG. 8A) is formed; thus, a shear deformation amount G of the third housing 440 may be reduced. In the electronic device 400 according to an embodiment of the disclosure, a shear deformation amount G of the third housing 440 is reduced; thus, deformation of an appearance of the third housing 440 may be reduced or prevented.

An electronic device 400 according to an embodiment (e.g., a first embodiment) of the disclosure may include a foldable display 460; a housing 410 including a first housing 411, a second housing 412, and a third housing 440 positioned between the first housing and the second housing, and configured to receive at least a portion of the foldable display 460; a fixing member 430 fixed to the third housing 440; a driving member 420 connected to the fixing member 430 and driven by a user manipulation; and a filling member 450 disposed in the third housing 440.

The fixing member 430 according to an embodiment (e.g. the first embodiment) of the disclosure may include a protruding part 432 protruded from a distal end surface thereof in a length direction thereof, the protruding part 432 may be disposed to face a first surface 440a of the third housing 440, which is a surface perpendicular to a length direction of the third housing 440, and the filling member 450 may be disposed between a distal end surface of the fixing member 430 and the first surface 440a of the third housing 440.

In an embodiment (e.g. a second embodiment based on the first embodiment), the protruding part 432 may include a first protruding part 432-1; and a second protruding part 432-2 spaced apart from the first protruding part 432-1 by a first distance W1.

In an embodiment (e.g. a third embodiment based on the second embodiment), at least a portion of the filling member 450 may be disposed between the first protruding part 432-1 and the second protruding part 432-2.

In an embodiment (e.g. a fourth embodiment based on the second or third embodiments), the fixing member 430 may include a connecting part 4321 connected at a distal end surface thereof and configured to connect the first protruding part 432-1 and the second protruding part 432-2.

In an embodiment (e.g. a fifth embodiment based on the fourth embodiment), the connecting part 4321 may have a small height when viewed from the first surface 440a of the third housing 440 compared to the first protruding part 432-1 and the second protruding part 432-2.

In an embodiment (e.g. a sixth embodiment based on the fourth or fifth embodiments), at least a portion of the connecting part 4321 and the filling member 450 may be disposed to be stacked in a height direction of the fixing member 430 when viewed from the first surface 440a of the third housing 440.

In an embodiment (e.g. an embodiment based on any of the fourth to sixth embodiments), the connecting part 4321 may contact the first surface 440a of the third housing 440.

In an embodiment (e.g. a seventh embodiment based on the second embodiment), the foldable display 460 may include a first display unit 461 and a second display unit 462 positioned with the third housing 440 therebetween.

In an embodiment (e.g. the seventh embodiment), when the foldable display 460 is in an unfolded state, the first protruding part 432-1 may be disposed under the first display unit 461, and the second protruding part 432-2 may be disposed under the second display unit 462.

In an embodiment (e.g. an eighth embodiment based on any of the first to seventh embodiments), the electronic device 400 may include hinge assemblies 420 and 430 configured to change a state of the foldable display to a folded state or an unfolded state, and the driving member 420 may be a shaft configured to perform a rotation function in the hinge assemblies, and the fixing member 430 may be a bracket configured to support the shaft.

In an embodiment (e.g. a ninth embodiment based on any of the first to eighth embodiments), the electronic device 400 may include hinge assemblies 420 and 430 configured to change a state of the foldable display 460 to a folded state or an unfolded state, and the hinge assemblies 420 and 430 may include a plurality of fixing members 430 including a first fixing member 430-1 and a second fixing member 430-2, the first fixing member 430-1 may be a fixing member, and the first fixing member 430-1 and the second fixing member 430-2 may be disposed to be spaced apart from the center of the electronic device 400 by the same distance.

In an embodiment (e.g. a tenth embodiment based on the ninth embodiment), the second fixing member 430-2 may be disposed to face a second surface of the third housing 440 formed at an opposite side of the first surface of the third housing 440, the second fixing member 430-2 may include a protruding part 432 protruded from a distal end surface thereof in a direction toward the second surface between the second fixing member 430-2 and the second surface, and the electronic device 400 may include another filling member 450 disposed between the distal end surface of the second fixing member 430-2 and the second surface of the third housing 440.

In an embodiment (e.g. an eleventh embodiment based on the ninth or tenth embodiment), the hinge assemblies 420 and 430 may include a third fixing member 430-3 disposed between the first fixing member 430-1 and the second fixing member 430-2.

In an embodiment (e.g. a twelfth embodiment based on any of the first to eleventh embodiments), the electronic device 400 may include a plurality of driving members 420 and a plurality of fixing members 430. In an embodiment, the plurality of fixing members 430 may support the plurality of driving members 420, respectively. In an embodiment, the plurality of driving members 420 and the plurality of fixing members 430 each may be disposed to be spaced apart in a length direction of the third housing 440.

In an embodiment (e.g. a thirteenth embodiment based on any of the first to twelfth embodiments), the protruding part 432 may have greater yield strength than that of the first surface 440a of the third housing 440.

In an embodiment (e.g. a fourteenth embodiment based on any of the first to thirteenth embodiments), the fixing member 430 may include a body 431 configured to support the driving member, and the protruding part 432 may be formed at a distal end of the body 431.

In an embodiment (e.g. an embodiment based on any of the first to fourteenth embodiments), the protruding part 432 may include a material different from that of the body 431 and have greater yield strength than that of the body 431 and the third housing 440.

In an embodiment (e.g. a fifteenth embodiment based on any of the first to fourteenth embodiments), the filling member 450 may include woven fibers.

In an embodiment (e.g. a sixteenth embodiment based on any of the first to fifteenth embodiments), the filling member 450 may be attached to the first surface 440a of the third housing 440 and be disposed to be spaced apart from the fixing member 430.

An electronic device 400 according to an embodiment (e.g. a seventeenth embodiment) of the disclosure may include a foldable display 460; hinge assemblies 420 and 430 configured to convert a state of the foldable display460 to a folded state or an unfolded state; and a housing 440 configured to receive at least a portion of the hinge assemblies 420 and 430, wherein the hinge assemblies 420 and 430 may include a plurality of protruding parts 432 formed from a distal end surface thereof in a length direction thereof and having a size smaller than that of the distal end surface thereof, and an inner side surface of the housing 440, which is a surface perpendicular to a length direction of the housing 440, may be configured to face the plurality of protruding parts 432.

In an embodiment (e.g. an eighteenth embodiment based on the seventeenth embodiment), the electronic device 400 may include a filling member 450 at least partially disposed between the plurality of protruding parts 432.

An electronic device 400 according to an embodiment (e.g. a nineteenth embodiment) of the disclosure may include a foldable display 460; a first housing 411; a second housing 412; a hinge housing 440 disposed between the first housing 411 and the second housing 412; and hinge assemblies 420 and 430 including a hinge bracket 430 fixed to the hinge housing 440 and a driving member 420 connected to the hinge bracket 430.

In an embodiment (e.g. the nineteenth embodiment), the first housing 411 and the second housing 412 may be rotatably coupled to each other through the hinge assemblies 420 and 430.

In an embodiment (e.g. the nineteenth embodiment), the hinge bracket 430 may include a protruding part 432 protruded in a length direction thereof from a distal end thereof.

In an embodiment (e.g. the nineteenth embodiment), the protruding part 432 may be fixed to the hinge housing 440 so as to provide structural strength to a longitudinal distal end portion 441 of the hinge housing 440.

In an embodiment (e.g. a twentieth embodiment based on the nineteenth embodiment), the hinge bracket 430 may include a plurality of protruding parts 432. In an embodiment, the electronic device 400 may include a blocking member 450 at least partially disposed between the plurality of protruding parts 432.

In a first example, there is provided an electronic device, comprising: a foldable display; a first hinge assembly configured to enable folding of the foldable display along a folding axis; and a housing configured to receive at least a portion of the first hinge assembly; wherein the first hinge assembly comprises a protruding part protruding from an end surface of the first hinge assembly towards a first inner side surface of the housing; and wherein the end surface and first inner side surface are perpendicular to the direction of the folding axis.

In a second example, there is provided the electronic device of the first example, wherein the protruding part is configured to have greater yield strength than at least one of: the inner side surface of the housing, and the end surface of the first hinge assembly.

In a third example, there is provided the electronic device of the first or second example, wherein the protruding part is formed of a different material than at least one of: the first inner side surface of the housing, and the end surface of the first hinge assembly.

In a fourth example, there is provided the electronic device of any of the first to third examples, wherein the protruding part comprises: a first protruding part; and a second protruding part spaced apart from the first protruding part by a first distance W1 in a direction perpendicular to the folding axis.

In a fifth example, there is provided the electronic device of any of the first to fourth examples, wherein the foldable display comprises a first display portion on a first side of the folding axis and a second display portion on a second side of the folding axis; and wherein, when the foldable display is in an unfolded state, the first protruding part is disposed under the first display portion, and the second protruding part is disposed under the second display portion.

In a sixth example, there is provided the electronic device of the fourth or fifth examples, further comprising a filling member; wherein at least a portion of the filling member is disposed between the first protruding part and the second protruding part; and wherein the filling member comprises at least one of: a space filling member, an elastic member, a blocking member, a dust inflow prevention member, a filter member, and woven fibers.

In a seventh example, there is provided the electronic device of any of the fourth to sixth examples, wherein the first hinge assembly comprises a connecting part connected at the end surface of the hinge assembly and configured to connect the first protruding part and the second protruding part.

In an eighth example, there is provided the electronic device of the seventh example when dependent on the sixth example, wherein at least a portion of the filling member and at least a portion of the connecting part are stacked between the housing and a rear surface of the foldable display.

In a ninth example, there is provided the electronic device of any of the first to eighth examples, wherein the protruding part is fixed to the first inner side surface of the housing.

In a tenth example, there is provided the electronic device of any of the first to ninth examples, wherein the housing comprises a first housing, a second housing, and a third housing positioned between the first housing and the second housing; wherein the first hinge assembly is disposed in the third housing; and wherein the first housing and the second housing are rotatably coupled to each other through the first hinge assembly.

In an eleventh example, there is provided the electronic device of any of the first to tenth examples, wherein the first hinge assembly comprises: a fixing member configured to fix the first hinge assembly to the housing, and a driving member configured to perform a rotation function; wherein the end surface of the first hinge assembly is an end surface of the fixing member.

In a twelfth example, there is provided the electronic device of the eleventh example, wherein the driving member comprises a shaft configured to perform the rotation function, and wherein the fixing member comprises a bracket configured to support the shaft.

In a thirteenth example, there is provided the electronic device of any of the first to twelfth examples, further comprising a second hinge assembly; wherein the second hinge assembly comprises a protruding part protruding from an end surface of the second hinge assembly towards a second inner side surface of the housing; and wherein the second inner side surface is at the opposite side of the housing to the first inner side surface.

In a fourteenth example, there is provided the electronic device of the thirteenth example, further comprising a third hinge assembly disposed between the first hinge assembly and the second hinge assembly.

In a fifteenth example, there is provided the electronic device of any of the first to fourteenth examples, wherein the protruding part has a shape configured to correspond to a shape of the housing.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic devices according to embodiments of the disclosure are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., module or program) of the above-described components may include a singular or a plurality of entities, and some of the plurality of entities may be separately disposed in any other component. According to an embodiment, one or more components or operations among the above-described components may be omitted, or one or more other components or operations may be added. Alternatively or additionally, a plurality of components (e.g., module or program) may be integrated into one component. In this case, the integrated component may perform one or more functions of each component of the plurality of components identically or similarly to those performed by the corresponding component among the plurality of components prior to the integration.

According to an embodiment, operations performed by a module, program, or other component may be executed sequentially, in parallel, repeatedly, or heuristically, or one or more of the operations may be executed in a different order or omitted, or one or more other operations may be added.

## Claims

1. An electronic device, comprising:
a foldable display;
a first hinge assembly configured to enable folding of the foldable display along a folding axis; and
a housing configured to receive at least a portion of the first hinge assembly;
wherein the first hinge assembly comprises a protruding part protruding from an end surface of the first hinge assembly towards a first inner side surface of the housing; and
wherein the end surface and first inner side surface are perpendicular to the direction of the folding axis.

2. The electronic device of claim 1, wherein the protruding part is configured to have greater yield strength than at least one of:
the first inner side surface of the housing, and
the end surface of the first hinge assembly.

3. The electronic device of claim 1 or 2, wherein the protruding part is formed of a different material than at least one of:
the first inner side surface of the housing, and
the end surface of the first hinge assembly.

4. The electronic device of any of claims 1 to 3, wherein the protruding part comprises:
a first protruding part; and
a second protruding part spaced apart from the first protruding part by a first distance W1 in a direction perpendicular to the folding axis.

5. The electronic device of any of claims 1 to 4, wherein the foldable display comprises a first display portion on a first side of the folding axis and a second display portion on a second side of the folding axis; and
wherein, when the foldable display is in an unfolded state, the first protruding part is disposed under the first display portion, and the second protruding part is disposed under the second display portion.

6. The electronic device of claim 4 or 5, further comprising a filling member;
wherein at least a portion of the filling member is disposed between the first protruding part and the second protruding part; and
wherein the filling member comprises at least one of:
a space filling member,
an elastic member,
a blocking member,
a dust inflow prevention member,
a filter member, and
woven fibers.

7. The electronic device of any of claims 4 to 6, wherein the first hinge assembly comprises a connecting part connected at the end surface of the hinge assembly and configured to connect the first protruding part and the second protruding part.

8. The electronic device of claim 7 when dependent on claim 6, wherein at least a portion of the filling member and at least a portion of the connecting part are stacked between the housing and a rear surface of the foldable display.

9. The electronic device of any preceding claim, wherein the protruding part is fixed to the first inner side surface of the housing.

10. The electronic device of any preceding claim, wherein the housing comprises a first housing, a second housing, and a third housing positioned between the first housing and the second housing;
wherein the first hinge assembly is disposed in the third housing; and
wherein the first housing and the second housing are rotatably coupled to each other through the first hinge assembly.

11. The electronic device of any preceding claim, wherein the first hinge assembly comprises:
a fixing member configured to fix the first hinge assembly to the housing, and
a driving member configured to perform a rotation function;
wherein the end surface of the first hinge assembly is an end surface of the fixing member.

12. The electronic device of claim 11, wherein the driving member comprises a shaft configured to perform the rotation function, and
wherein the fixing member comprises a bracket configured to support the shaft.

13. The electronic device of any preceding claim, further comprising a second hinge assembly;
wherein the second hinge assembly comprises a protruding part protruding from an end surface of the second hinge assembly towards a second inner side surface of the housing; and
wherein the second inner side surface is at the opposite side of the housing to the first inner side surface.

14. The electronic device of claim 13, further comprising a third hinge assembly disposed between the first hinge assembly and the second hinge assembly.

15. The electronic device of any preceding claim, wherein the protruding part has a shape configured to correspond to a shape of the housing.
